# EUROPEAN PATENT SPECIFICATION

(11) **EP 4 362 507 B1**
(45) Date of publication and mention of the grant of the patent: **25.02.2026**
(21) Application number: 22860405.4
(22) Date of filing: 19.08.2022
(51) Int. Cl.: H04L 67/51, H04W 4/02, H04W 4/80, H04W 8/20, H04W 76/11, H04W 92/18, H04W 8/00

(54) **COMMUNICATION SYSTEM AND COMMUNICATION METHOD FOR SENDING PROJECTION REQUESTS**
KOMMUNIKATIONSSYSTEM UND KOMMUNIKATIONSVERFAHREN ZUM SENDEN VON PROJEKTIONSANFORDERUNGEN
SYSTÈME ET PROCÉDÉ DE COMMUNICATION POUR L'ENVOI DE DEMANDES DE PROJECTION

(30) Priority: 26.08.2021 CN 202110999943
(43) Date of publication of application: 01.05.2024
(73) Proprietor: Huawei Technologies Co., Ltd., Longgang Shenzhen, Guangdong 518129 (CN)
(72) Inventor: ZHANG, Yingying, Shenzhen, Guangdong 518129 (CN); HU, Shiyao, Shenzhen, Guangdong 518129 (CN); ZHANG, Huaxiang, Shenzhen, Guangdong 518129 (CN); WU, Haoran, Shenzhen, Guangdong 518129 (CN); LIU, Luohai, Shenzhen, Guangdong 518129 (CN)
(74) Representative: Gill Jennings & Every LLP
(86) International application number: PCT/CN2022/113609
(87) International publication number: WO 2023/025059

(56) References cited:
- EP-A1- 2 385 689
- CN-A- 112 130 475
- CN-A- 112 135 185
- CN-A- 112 351 322
- CN-A- 112 804 732

## Description

### TECHNICAL FIELD

This application relates to the terminal field, and in particular, to a communication system and a communication method.

### BACKGROUND

When a plurality of electronic devices are connected to a same local area network, the electronic devices may perform searches, to implement a plurality of application scenarios. For example, a common application scenario of searching between electronic devices includes projection. During projection, a transmit end device searches for a receive end device, and sends projection data to the receive end device after finding the receive end device, and the receive end device displays the received projection data. However, when an existing electronic device performs a search, a success rate of the search depends on a network environment of a local area network. When the network environment of the local area network is unstable, a packet loss may occur. As a result, time for searching between electronic devices is excessively long or the search fails. CN112351322A describes a method, terminal equipment and system for realizing a 'touch screen projection' function.

### SUMMARY

To resolve the foregoing technical problem, this application provides a communication system and a communication method. According to the technical solutions provided in this application, a technical problem of excessively long search time between electronic devices or a search failure can be resolved, to improve search efficiency, shorten search duration, and improve user experience.

According to a first aspect, a communication system is provided. The communication system includes a first electronic device and a second electronic device. The first electronic device includes: a first processor; a first memory, where the first memory is coupled to the first processor; and a first computer program, where the first computer program is stored in the first memory. When the first computer program is executed by the first processor, the first electronic device is enabled to perform the following operations:
establishing, within a first distance from the second electronic device, a connection in a first short-range wireless communication manner to the second electronic device;
sending a first search request message in a multicast or broadcast manner in response to the establishment of the connection in the first short-range wireless communication manner; and
receiving a second search request message from the second electronic device; and outputting, in response to the second search request message, second identification information related to the second electronic device, where the second identification information includes at least one second projection identifier.

The second electronic device includes: a second processor; a second memory, where the second memory is coupled to the second processor; and a second computer program, where the second computer program is stored in the second memory. When the second computer program is executed by the second processor, the second electronic device is enabled to perform the following operations:
establishing, within the first distance from the first electronic device, the connection in the first short-range wireless communication manner to the first electronic device;
sending the second search request message in the multicast or broadcast manner in response to the establishment of the connection in the first short-range wireless communication manner;
receiving the first search request message from the first electronic device; and
outputting, in response to the first search request message, first identification information related to the first electronic device, where the first identification information includes at least one first projection identifier.

Both the first projection identifier and the second projection identifier correspond to a same manner of projection between the first electronic device and the second electronic device.

The first distance is a distance within which the first electronic device and the second electronic device can communicate with each other in the first short-range wireless communication manner.

In the first aspect, the first electronic device sends the first search request message in the multicast or broadcast manner in response to the establishment of the connection in the first short-range wireless communication manner. The second electronic device sends the second search request message in the multicast or broadcast manner in response to the establishment of the connection in the first short-range wireless communication manner. The first electronic device and the second electronic device perform a two-way search in response to a same action.

In addition, the first search request message multicast or broadcast by the first electronic device includes the first identification information, and the second search request message multicast or broadcast by the second electronic device includes the second identification information. Therefore, after the first electronic device receives the second search request message or the second electronic device receives the first search request message, projection may be performed based on the identification information in the search request message. This can effectively reduce a probability of a projection search failure, and improve device projection search efficiency.

In some implementations, the first electronic device and the second electronic device may be electronic devices that support a multi-device collaboration technology, such as a smartphone, a notebook computer, a desktop computer, a tablet computer, a wearable device, a vehicle-mounted device, an ultra-mobile personal computer (ultra-mobile personal computer, UMPC), a netbook, a personal digital assistant (personal digital assistant, PDA), a smart television, a projection device, or an augmented reality (augmented reality, AR)/virtual reality (virtual reality, VR) device.

In some implementations, the first electronic device further performs the following operations: sending a second search response message to the second electronic device in response to the second search request message; receiving a first search response message from the second electronic device; and sending, to the second electronic device in response to a first user input for the second projection identifier, a second projection request related to the second projection identifier.

In some implementations, the second electronic device further performs the following operations: sending the first search response message to the first electronic device in response to the first search request message; receiving the second search response message from the first electronic device; and sending, to the first electronic device in response to a second user input for the first projection identifier, a first projection request related to the first projection identifier.

In some implementations, the first electronic device further performs the following operation: sending, to the second electronic device in response to the first user input for the second projection identifier, the second projection request related to the second projection identifier, where the second projection request is used for projection by the first electronic device to the second electronic device.

In some implementations, the second electronic device further performs the following operation:
sending, to the first electronic device in response to the second user input for the first projection identifier, the first projection request related to the first projection identifier, where the first projection request is used to request the first electronic device to project a screen to the second electronic device.

In some implementations, the sending of the first search request message and the sending of the second search response message run synchronously on the first electronic device and are independent of each other.

The sending of the second search request message and the sending of the first search response message run synchronously on the second electronic device and are independent of each other.

In some implementations, the first search request message includes the first identification information, and the second search request message includes the second identification information.

In some implementations, the first search request message further includes: a standard packet start field, a forwarding host address field, a notification type field, a maximum waiting time field, a search target field, and a first projection identifier field.

The second search request message further includes: a standard packet start field, a forwarding host address field, a notification type field, a maximum waiting time field, a search target field, and a second projection identifier field.

In some implementations, the first search response message includes the second identification information, and the second search response message includes the first identification information.

In some implementations, the first short-range wireless communication manner includes one of Bluetooth, near field communication, or a wireless network.

In some implementations, the first projection identifier includes a device name of the first electronic device.

In some implementations, the outputting first identification information related to the first electronic device includes:
displaying the device name of the first electronic device on the second electronic device.

In some implementations, before the outputting first identification information related to the first electronic device, the second electronic device further performs the following operations:
obtaining the output first identification information; and when the output first identification information includes third identification information related to the first electronic device, not outputting the third identification information related to the first electronic device; or when the output first identification information does not include third identification information related to the first electronic device, outputting the third identification information related to the first electronic device.

In some implementations, the second projection identifier includes a device name of the second electronic device.

In some implementations, the outputting second identification information related to the second electronic device includes: displaying the device name of the second electronic device on the first electronic device.

In some implementations, before the outputting second identification information related to the second electronic device, the first electronic device further performs the following operations:
obtaining the output second identification information; and when the output second identification information includes fourth identification information related to the second electronic device, not outputting the fourth identification information related to the first electronic device; or when the output second identification information does not include fourth identification information related to the second electronic device, outputting the fourth identification information related to the second electronic device.

According to a second aspect, a communication system is provided. The communication system includes a first electronic device and a second electronic device. The first electronic device includes: a first processor; a first memory, where the first memory is coupled to the first processor; and a first computer program, where the first computer program is stored in the first memory. When the first computer program is executed by the first processor, the first electronic device is enabled to perform the following operations:
establishing, within a first distance from the second electronic device, a connection in a first short-range wireless communication manner to the second electronic device;
sending a first search request message in a multicast or broadcast manner in response to the establishment of the connection in the first short-range wireless communication manner, where the first search request message does not include first identification information related to the first electronic device, and the first identification information includes at least one first projection identifier;
receiving a second search request message from the second electronic device; and
outputting, in response to the second search request message, second identification information related to the second electronic device, where the second identification information includes at least one second projection identifier.

The second electronic device includes: a second processor; a second memory, where the second memory is coupled to the second processor; and a second computer program, where the second computer program is stored in the second memory. When the second computer program is executed by the second processor, the second electronic device is enabled to perform the following operations:
establishing, within the first distance from the first electronic device, the connection in the first short-range wireless communication manner to the first electronic device;
sending the second search request message in the multicast or broadcast manner in response to the establishment of the connection in the first short-range wireless communication manner;
receiving the first search request message from the first electronic device; and
sending a first search response message to the first electronic device in response to the first search request message, where the first search response message includes the second identification information.

Both the first projection identifier and the second projection identifier correspond to a same manner of projection between the first electronic device and the second electronic device. The first distance is a distance within which the first electronic device and the second electronic device can communicate with each other in the first short-range wireless communication manner.

In the second aspect, the first electronic device sends the first search request message in the multicast or broadcast manner in response to the establishment of the connection in the first short-range wireless communication manner. The second electronic device sends the second search request message in the multicast or broadcast manner in response to the establishment of the connection in the first short-range wireless communication manner. The first electronic device and the second electronic device perform a two-way search in response to a same action.

In addition, the second search request message multicast or broadcast by the second electronic device includes the second identification information. Therefore, after receiving the second search request message, the first electronic device may perform projection based on the second identification information in the second search request message. This can effectively reduce a probability of a projection search failure, and improve device projection search efficiency.

In some implementations, the first electronic device further performs the following operations:
sending a second search response message to the second electronic device in response to the second search request message; receiving the first search response message from the second electronic device, where the first search response message includes the second identification information; and sending, to the second electronic device in response to a first user input for the second projection identifier, a second projection request related to the second projection identifier.

In some implementations, the second electronic device further performs the following operations:
receiving the second search response message from the first electronic device, where the second search response message includes the first identification information; and sending, to the first electronic device in response to a second user input for the first projection identifier, a first projection request related to the first projection identifier.

In some implementations, the first electronic device further performs the following operation:
sending, to the second electronic device in response to the first user input for the second projection identifier, the second projection request related to the second projection identifier, where the second projection request is used for projection by the first electronic device to the second electronic device.

In some implementations, the second electronic device further performs the following operation:
sending, to the first electronic device in response to the second user input for the first projection identifier, the first projection request related to the first projection identifier, where the first projection request is used to request the first electronic device to project a screen to the second electronic device.

In some implementations, the sending of the first search request message, the receiving of the first search response message, the receiving of the second search request message, and the sending of the second search response message run synchronously on the first electronic device and are independent of each other.

The sending of the second search request message, the receiving of the second search response message, the receiving of the first search request message, and the sending of the first search response message run synchronously on the second electronic device and are independent of each other.

In some implementations, the first search request message further includes:
a standard packet start field, a forwarding host address field, a notification type field, a maximum waiting time field, and a search target field; and the second search request message further includes: a standard packet start field, a forwarding host address field, a notification type field, a maximum waiting time field, a search target field, and a second projection identifier field.

In some implementations, the first search response message includes
the second identification information, and the second search response message includes the first identification information.

In some implementations, the first short-range wireless communication manner includes one of Bluetooth, near field communication, or a wireless network.

In some implementations, the first projection identifier includes a device name of the first electronic device.

In some implementations, the outputting first identification information related to the first electronic device includes:
displaying the device name of the first electronic device on the second electronic device.

In some implementations, before the outputting first identification information related to the first electronic device, the second electronic device further performs the following operations:
obtaining the output first identification information; and when the output first identification information includes third identification information related to the first electronic device, not outputting the third identification information related to the first electronic device; or when the output first identification information does not include third identification information related to the first electronic device, outputting the third identification information related to the first electronic device.

In some implementations, the second projection identifier includes a device name of the second electronic device.

**In** some implementations, the outputting second identification information related to the second electronic device includes:
displaying the device name of the second electronic device on the first electronic device.

**In** some implementations, before the outputting second identification information related to the second electronic device, the first electronic device further performs the following operations:
obtaining the output second identification information; and when the output second identification information includes fourth identification information related to the second electronic device, not outputting the fourth identification information related to the first electronic device; or when the output second identification information does not include fourth identification information related to the second electronic device, outputting the fourth identification information related to the second electronic device.

According to a third aspect, an embodiment of this application provides a communication system, including a first electronic device and a second electronic device. The first electronic device includes: a first processor; a first memory, where the first memory is coupled to the first processor; and a first computer program, where the first computer program is stored in the first memory. When the first computer program is executed by the first processor, the first electronic device is enabled to perform the following operations:
establishing, within a first distance from the second electronic device, a connection in a first short-range wireless communication manner to the second electronic device; sending a first search request message in a multicast or broadcast manner in response to the establishment of the connection in the first short-range wireless communication manner; receiving a second search request message from the second electronic device; and sending a second search response message to the second electronic device in response to the second search request message, where the second search response message includes first identification information related to the first electronic device, and the first identification information includes at least one first projection identifier.

The second electronic device includes: a second processor; a second memory, where the second memory is coupled to the second processor; and a second computer program, where the second computer program is stored in the second memory. When the second computer program is executed by the second processor, the second electronic device is enabled to perform the following operations:
establishing, within the first distance from the first electronic device, the connection in the first short-range wireless communication manner to the first electronic device; sending the second search request message in the multicast or broadcast manner in response to the establishment of the connection in the first short-range wireless communication manner, where the second search request message does not include second identification information related to the second electronic device, and the second identification information includes at least one second projection identifier; and receiving the first search request message from the first electronic device, and outputting, in response to the first search request message, the first identification information related to the first electronic device, where the first identification information includes the at least one first projection identifier.

Both the first projection identifier and the second projection identifier correspond to a same manner of projection between the first electronic device and the second electronic device. The first distance is a distance within which the first electronic device and the second electronic device can communicate with each other in the first short-range wireless communication manner.

In the third aspect, the first electronic device sends the first search request message in the multicast or broadcast manner in response to the establishment of the connection in the first short-range wireless communication manner. The second electronic device sends the second search request message in the multicast or broadcast manner in response to the establishment of the connection in the first short-range wireless communication manner. The first electronic device and the second electronic device perform a two-way search in response to a same action. In addition, the first search request message multicast or broadcast by the first electronic device includes the first identification information. Therefore, after receiving the first search request message, the second electronic device may perform projection based on the first identification information in the first search request message. This can effectively reduce a probability of a projection search failure, and improve device projection search efficiency.

In some implementations, the first electronic device further performs the following operations:
receiving a first search response message from the second electronic device, where the first search response message includes the second identification information; and sending, to the second electronic device in response to a first user input for the second projection identifier, a second projection request related to the second projection identifier.

In some implementations, the second electronic device further performs the following operations:
sending the first search response message to the first electronic device in response to the first search request message; receiving the second search response message from the first electronic device, where the second search response message includes the first identification information; and sending, to the first electronic device in response to a second user input for the first projection identifier, a first projection request related to the first projection identifier.

In some implementations, the first electronic device further performs the following operation: sending, to the second electronic device in response to the first user input for the second projection identifier, the second projection request related to the second projection identifier, where the second projection request is used for projection by the first electronic device to the second electronic device.

In some implementations, the second electronic device further performs the following operation: sending, to the first electronic device in response to the second user input for the first projection identifier, the first projection request related to the first projection identifier, where the first projection request is used to request the first electronic device to project a screen to the second electronic device.

In some implementations, the sending of the first search request message, the receiving of the first search response message, the receiving of the second search request message, and the sending of the second search response message run synchronously on the first electronic device and are independent of each other. The sending of the second search request message, the receiving of the second search response message, the receiving of the first search request message, and the sending of the first search response message run synchronously on the second electronic device and are independent of each other.

In some implementations, the first search request message further includes: a standard packet start field, a forwarding host address field, a notification type field, a maximum waiting time field, a search target field, and a first projection identifier field.

The second search request message further includes: a standard packet start field, a forwarding host address field, a notification type field, a maximum waiting time field, and a search target field.

In some implementations, the first search response message includes the second identification information, and the second search response message includes the first identification information.

In some implementations, the first short-range wireless communication manner includes one of Bluetooth, near field communication, or a wireless network.

In some implementations, the first projection identifier includes a device name of the first electronic device.

In some implementations, the outputting first identification information related to the first electronic device includes: displaying the device name of the first electronic device on the second electronic device.

In some implementations, before the outputting first identification information related to the first electronic device, the second electronic device further performs the following operations: obtaining the output first identification information; and when the output first identification information includes third identification information related to the first electronic device, not outputting the third identification information related to the first electronic device; or when the output first identification information does not include third identification information related to the first electronic device, outputting the third identification information related to the first electronic device.

In some implementations, the second projection identifier includes a device name of the second electronic device.

In some implementations, the outputting second identification information related to the second electronic device includes: displaying the device name of the second electronic device on the first electronic device.

In some implementations, before the outputting second identification information related to the second electronic device, the first electronic device further performs the following operations: obtaining the output second identification information; and when the output second identification information includes fourth identification information related to the second electronic device, not outputting the fourth identification information related to the first electronic device; or when the output second identification information does not include fourth identification information related to the second electronic device, outputting the fourth identification information related to the second electronic device.

According to a fourth aspect, an embodiment of this application provides a communication system, including a first electronic device and a second electronic device. The first electronic device includes: a first processor; a first memory, where the first memory is coupled to the first processor; and a first computer program, where the first computer program is stored in the first memory. When the first computer program is executed by the first processor, the first electronic device is enabled to perform the following operations:
establishing, within a first distance from a third electronic device, a connection in a first short-range wireless communication manner to the third electronic device, where the third electronic device is an auxiliary device of the second electronic device, and the third electronic device is connected to the second electronic device; sending a first search request message in a multicast or broadcast manner in response to the establishment of the connection in the first short-range wireless communication manner; receiving a first search response message from the second electronic device; outputting, in response to the first search response message, second identification information related to the second electronic device, where the second identification information includes at least one second projection identifier; receiving a second search request message from the second electronic device; and sending a second search response message to the second electronic device in response to the second search request message.

The second electronic device includes: a second processor; a second memory, where the second memory is coupled to the second processor; and a second computer program, where the second computer program is stored in the second memory. When the second computer program is executed by the second processor, the second electronic device is enabled to perform the following operations:
determining that a distance between the first electronic device and the third electronic device is within the first distance, and establishing the connection in the first short-range wireless communication manner to the third electronic device; sending the second search request message in the multicast or broadcast manner in response to the establishment of the connection in the first short-range wireless communication manner; receiving the second search response message from the first electronic device; outputting, in response to the second search response message, first identification information related to the first electronic device, where the first identification information includes at least one first projection identifier; receiving the first search request message from the first electronic device; and sending the first search response message to the first electronic device in response to the first search request message, where the sending of the first search request message, the receiving of the first search response message, the receiving of the second search request message, and the sending of the second search response message run synchronously on the first electronic device and are independent of each other; the sending of the second search request message, the receiving of the second search response message, the receiving of the first search request message, and the sending of the first search response message run synchronously on the second electronic device and are independent of each other; both the first projection identifier and the second projection identifier correspond to a same manner of projection between the first electronic device and the second electronic device; and the first distance is a distance within which the first electronic device and the third electronic device can communicate with each other in the first short-range wireless communication manner.

In the fourth aspect, the first electronic device sends the first search request message in the multicast or broadcast manner in response to the establishment of the connection in the first short-range wireless communication manner to the third electronic device. The second electronic device determines, by using the third electronic device, that the first electronic device establishes the connection in the first short-range wireless communication manner to the third electronic device, and sends the second search request message in the multicast or broadcast manner in response to the establishment of the connection in the first short-range wireless communication manner. This can expand application scenarios of the communication system, and improve compatibility and usability of the communication system.

In some implementations, the first electronic device further performs the following operation:
sending, to the second electronic device in response to the first user input for the second projection identifier, the second projection request related to the second projection identifier, where the second projection request is used for projection by the first electronic device to the second electronic device.

In some implementations, the second electronic device further performs the following operation:
sending, to the first electronic device in response to the second user input for the first projection identifier, the first projection request related to the first projection identifier, where the first projection request is used to request the first electronic device to project a screen to the second electronic device.

In some implementations, the first search request message further includes:
a standard packet start field, a forwarding host address field, a notification type field, a maximum waiting time field, a search target field, and a first projection identifier field; and the second search request message further includes: a standard packet start field, a forwarding host address field, a notification type field, a maximum waiting time field, a search target field, and a second projection identifier field.

In some implementations, the first search response message includes the second identification information, and the second search response message includes the first identification information.

In some implementations, the first short-range wireless communication manner includes one of Bluetooth, near field communication, or a wireless network.

In some implementations, the first projection identifier includes a device name of the first electronic device.

In some implementations, the outputting first identification information related to the first electronic device includes: displaying the device name of the first electronic device on the second electronic device.

In some implementations, before the outputting first identification information related to the first electronic device, the second electronic device further performs the following operations: obtaining the output first identification information; and when the output first identification information includes third identification information related to the first electronic device, not outputting the third identification information related to the first electronic device; or when the output first identification information does not include third identification information related to the first electronic device, outputting the third identification information related to the first electronic device.

In some implementations, the second projection identifier includes a device name of the second electronic device.

In some implementations, the outputting second identification information related to the second electronic device includes: displaying the device name of the second electronic device on the first electronic device.

In some implementations, before the outputting second identification information related to the second electronic device, the first electronic device further performs the following operations:
obtaining the output second identification information; and when the output second identification information includes fourth identification information related to the second electronic device, not outputting the fourth identification information related to the first electronic device; or when the output second identification information does not include fourth identification information related to the second electronic device, outputting the fourth identification information related to the second electronic device.

According to a fifth aspect, an embodiment of this application provides a communication method, applied to the communication system provided in the first aspect, where the communication system includes a first electronic device and a second electronic device, and the method includes:
The first electronic device establishes, within a first distance from the second electronic device, a connection in a first short-range wireless communication manner to the second electronic device. In response to the establishment of the connection in the first short-range wireless communication manner, the first electronic device and the second electronic device respectively send a first search request message and a second search request message in a multicast or broadcast manner. The first electronic device receives the second search request message from the second electronic device. The first electronic device outputs, in response to the second search request message, second identification information related to the second electronic device, where the second identification information includes at least one second projection identifier. The second electronic device receives the first search request message from the first electronic device. The second electronic device outputs, in response to the first search request message, first identification information related to the first electronic device, where the first identification information includes at least one first projection identifier. Both the first projection identifier and the second projection identifier correspond to a same manner of projection between the first electronic device and the second electronic device. The first distance is a distance within which the first electronic device and the second electronic device can communicate with each other in the first short-range wireless communication manner.

For beneficial effects of the fifth aspect, refer to related descriptions in the first aspect. Details are not described herein again.

In some implementations, the method further includes:
The first electronic device sends a second search response message to the second electronic device in response to the second search request message. The first electronic device receives a first search response message from the second electronic device. The first electronic device sends, to the second electronic device in response to a first user input for the second projection identifier, a second projection request related to the second projection identifier.

In some implementations, the method further includes: The second electronic device sends the first search response message to the first electronic device in response to the first search request message. The second electronic device receives the second search response message from the first electronic device. The second electronic device sends, to the first electronic device in response to a second user input for the first projection identifier, a first projection request related to the first projection identifier.

In some implementations, the method further includes: The first electronic device sends, to the second electronic device in response to the first user input for the second projection identifier, the second projection request related to the second projection identifier, where the second projection request is used for projection by the first electronic device to the second electronic device.

In some implementations, the method further includes: The second electronic device sends, to the first electronic device in response to the second user input for the first projection identifier, the first projection request related to the first projection identifier, where the first projection request is used to request the first electronic device to project a screen to the second electronic device.

In some implementations, the sending of the first search request message and the sending of the second search response message run synchronously on the first electronic device and are independent of each other. The sending of the second search request message and the sending of the first search response message run synchronously on the second electronic device and are independent of each other.

In some implementations, the first search request message includes the first identification information, and the second search request message includes the second identification information.

In some implementations, the first search request message further includes: a standard packet start field, a forwarding host address field, a notification type field, a maximum waiting time field, a search target field, and a first projection identifier field. The second search request message further includes: a standard packet start field, a forwarding host address field, a notification type field, a maximum waiting time field, a search target field, and a second projection identifier field.

In some implementations, the first search response message includes the second identification information, and the second search response message includes the first identification information.

In some implementations, the first short-range wireless communication manner includes one of Bluetooth, near field communication, or a wireless network.

In some implementations, the first projection identifier includes a device name of the first electronic device.

In some implementations, the outputting first identification information related to the first electronic device includes: displaying the device name of the first electronic device on the second electronic device.

In some implementations, before the outputting first identification information related to the first electronic device, the second electronic device further performs the following operations:
obtaining the output first identification information; and when the output first identification information includes third identification information related to the first electronic device, not outputting the third identification information related to the first electronic device; or when the output first identification information does not include third identification information related to the first electronic device, outputting the third identification information related to the first electronic device.

In some implementations, the second projection identifier includes a device name of the second electronic device.

In some implementations, the outputting second identification information related to the second electronic device includes: displaying the device name of the second electronic device on the first electronic device.

In some implementations, before the outputting second identification information related to the second electronic device, the first electronic device further performs the following operations:
obtaining the output second identification information; and when the output second identification information includes fourth identification information related to the second electronic device, not outputting the fourth identification information related to the first electronic device; or when the output second identification information does not include fourth identification information related to the second electronic device, outputting the fourth identification information related to the second electronic device.

According to a sixth aspect, an embodiment of this application provides a communication method, applied to the communication system provided in the second aspect, where the communication system includes a first electronic device and a second electronic device, and the method includes:
The first electronic device establishes, within a first distance from the second electronic device, a connection in a first short-range wireless communication manner to the second electronic device. In response to the establishment of the connection in the first short-range wireless communication manner, the first electronic device and the second electronic device respectively send a first search request message and a second search request message in a multicast or broadcast manner. The first electronic device receives the second search request message from the second electronic device. The first electronic device outputs, in response to the second search request message, second identification information related to the second electronic device, where the second identification information includes at least one second projection identifier; and the first electronic device sends a second search response message to the second electronic device. The second electronic device receives the second search response message from the first electronic device. The second electronic device outputs, in response to the second search response message, first identification information related to the first electronic device, where the first identification information includes at least one first projection identifier. The second electronic device receives the first search request message from the first electronic device. The second electronic device sends a first search response message to the first electronic device in response to the first search request message. The first search request message does not include the first identification information, and the second search response message includes the first identification information. Both the first projection identifier and the second projection identifier correspond to a same manner of projection between the first electronic device and the second electronic device. The first distance is a distance within which the first electronic device and the second electronic device can communicate with each other in the first short-range wireless communication manner.

For beneficial effects of the sixth aspect, refer to related descriptions in the second aspect. Details are not described herein again.

In some implementations, the method further includes:
The first electronic device sends the second search response message to the second electronic device in response to the second search request message. The first electronic device receives the first search response message from the second electronic device, where the first search response message includes the second identification information. The first electronic device sends, to the second electronic device in response to a first user input for the second projection identifier, a second projection request related to the second projection identifier.

In some implementations, the method further includes:
The second electronic device receives the second search response message from the first electronic device, where the second search response message includes the first identification information. The second electronic device sends, to the first electronic device in response to a second user input for the first projection identifier, a first projection request related to the first projection identifier.

In some implementations, the method further includes:
The first electronic device sends, to the second electronic device in response to the first user input for the second projection identifier, the second projection request related to the second projection identifier, where the second projection request is used for projection by the first electronic device to the second electronic device.

In some implementations, the method further includes: The second electronic device sends, to the first electronic device in response to the second user input for the first projection identifier, the first projection request related to the first projection identifier, where the first projection request is used to request the first electronic device to project a screen to the second electronic device.

In some implementations, the sending of the first search request message and the sending of the second search response message run synchronously on the first electronic device and are independent of each other. The sending of the second search request message and the sending of the first search response message run synchronously on the second electronic device and are independent of each other.

In some implementations, the first search request message further includes:
a standard packet start field, a forwarding host address field, a notification type field, a maximum waiting time field, and a search target field; and the second search request message further includes: a standard packet start field, a forwarding host address field, a notification type field, a maximum waiting time field, a search target field, and a second projection identifier field.

In some implementations, the first search response message includes
the second identification information, and the second search response message includes the first identification information.

In some implementations, the first short-range wireless communication manner includes one of Bluetooth, near field communication, or a wireless network.

In some implementations, the first projection identifier includes a device name of the first electronic device.

In some implementations, the outputting first identification information related to the first electronic device includes: displaying the device name of the first electronic device on the second electronic device.

In some implementations, before the outputting first identification information related to the first electronic device, the second electronic device further performs the following operations: obtaining the output first identification information; and when the output first identification information includes third identification information related to the first electronic device, not outputting the third identification information related to the first electronic device; or when the output first identification information does not include third identification information related to the first electronic device, outputting the third identification information related to the first electronic device.

In some implementations, the second projection identifier includes a device name of the second electronic device.

**In** some implementations, the outputting second identification information related to the second electronic device includes: displaying the device name of the second electronic device on the first electronic device.

**In** some implementations, before the outputting second identification information related to the second electronic device, the first electronic device further performs the following operations:
obtaining the output second identification information; and when the output second identification information includes fourth identification information related to the second electronic device, not outputting the fourth identification information related to the first electronic device; or when the output second identification information does not include fourth identification information related to the second electronic device, outputting the fourth identification information related to the second electronic device.

According to a seventh aspect, an embodiment of this application provides a communication method, applied to the communication system provided in the third aspect, where the communication system includes a first electronic device and a second electronic device, and the method includes:
The first electronic device establishes, within a first distance from the second electronic device, a connection in a first short-range wireless communication manner to the second electronic device. In response to the establishment of the connection in the first short-range wireless communication manner, the first electronic device and the second electronic device respectively send a first search request message and a second search request message in a multicast or broadcast manner. The first electronic device receives a first search response message from the second electronic device. The first electronic device outputs, in response to the first search response message, second identification information related to the second electronic device, where the second identification information includes at least one second projection identifier. The first electronic device receives the second search request message from the second electronic device. The first electronic device sends a second search response message to the second electronic device in response to the second search request message. The second electronic device receives the first search request message from the first electronic device. The second electronic device outputs, in response to the first search request message, first identification information related to the first electronic device, where the first identification information includes at least one first projection identifier; and the second electronic device sends the first search response message to the first electronic device. The second search request message does not include the second identification information, and the first search response message includes the second identification information. Both the first projection identifier and the second projection identifier correspond to a same manner of projection between the first electronic device and the second electronic device. The first distance is a distance within which the first electronic device and the second electronic device can communicate with each other in the first short-range wireless communication manner.

For beneficial effects of the seventh aspect, refer to related descriptions in the third aspect. Details are not described herein again.

In some implementations, the method further includes:
The first electronic device receives the first search response message from the second electronic device, where the first search response message includes the second identification information. The first electronic device sends, to the second electronic device in response to a first user input for the second projection identifier, a second projection request related to the second projection identifier.

In some implementations, the method further includes: The second electronic device sends the first search response message to the first electronic device in response to the first search request message. The second electronic device receives the second search response message from the first electronic device, where the second search response message includes the first identification information. The second electronic device sends, to the first electronic device in response to a second user input for the first projection identifier, a first projection request related to the first projection identifier.

In some implementations, the method further includes: The first electronic device sends, to the second electronic device in response to the first user input for the second projection identifier, the second projection request related to the second projection identifier, where the second projection request is used for projection by the first electronic device to the second electronic device.

In some implementations, the method further includes: The second electronic device sends, to the first electronic device in response to the second user input for the first projection identifier, the first projection request related to the first projection identifier, where the first projection request is used to request the first electronic device to project a screen to the second electronic device.

In some implementations, the sending of the first search request message and the sending of the second search response message run synchronously on the first electronic device and are independent of each other. The sending of the second search request message and the sending of the first search response message run synchronously on the second electronic device and are independent of each other.

In some implementations, the first search request message further includes: a standard packet start field, a forwarding host address field, a notification type field, a maximum waiting time field, a search target field, and a first projection identifier field. The second search request message further includes: a standard packet start field, a forwarding host address field, a notification type field, a maximum waiting time field, a search target field, and a second projection identifier field.

In some implementations, the first search response message includes the second identification information, and the second search response message includes the first identification information.

In some implementations, the first short-range wireless communication manner includes one of Bluetooth, near field communication, or a wireless network.

In some implementations, the first projection identifier includes a device name of the first electronic device.

In some implementations, the outputting first identification information related to the first electronic device includes: displaying the device name of the first electronic device on the second electronic device.

In some implementations, before the outputting first identification information related to the first electronic device, the second electronic device further performs the following operations:
obtaining the output first identification information; and when the output first identification information includes third identification information related to the first electronic device, not outputting the third identification information related to the first electronic device; or when the output first identification information does not include third identification information related to the first electronic device, outputting the third identification information related to the first electronic device.

In some implementations, the second projection identifier includes a device name of the second electronic device.

In some implementations, the outputting second identification information related to the second electronic device includes: displaying the device name of the second electronic device on the first electronic device.

In some implementations, before the outputting second identification information related to the second electronic device, the first electronic device further performs the following operations:
obtaining the output second identification information; and when the output second identification information includes fourth identification information related to the second electronic device, not outputting the fourth identification information related to the first electronic device; or when the output second identification information does not include fourth identification information related to the second electronic device, outputting the fourth identification information related to the second electronic device.

According to an eighth aspect, an embodiment of this application provides a communication method, applied to the communication system provided in the fourth aspect, where the communication system includes a first electronic device and a second electronic device, and the method includes: The first electronic device establishes, within a first distance from a third electronic device, a connection in a first short-range wireless communication manner to the third electronic device, where the third electronic device is an auxiliary device of the second electronic device, and the third electronic device is connected to the second electronic device. In response to the establishment of the connection in the first short-range wireless communication manner, the first electronic device and the second electronic device respectively send a first search request message and a second search request message in a multicast or broadcast manner. The first electronic device receives a first search response message from the second electronic device. The first electronic device outputs, in response to the first search response message, second identification information related to the second electronic device, where the second identification information includes at least one second projection identifier. The first electronic device receives the second search request message from the second electronic device. The first electronic device sends a second search response message to the second electronic device in response to the second search request message.

The second electronic device receives the second search response message from the first electronic device. The second electronic device outputs, in response to the second search response message, first identification information related to the first electronic device, where the first identification information includes at least one first projection identifier. The second electronic device receives the first search request message from the first electronic device. The second electronic device sends the first search response message to the first electronic device in response to the first search request message. The sending of the first search request message, the receiving of the first search response message, the receiving of the second search request message, and the sending of the second search response message run synchronously on the first electronic device and are independent of each other. The sending of the second search request message, the receiving of the second search response message, the receiving of the first search request message, and the sending of the first search response message run synchronously on the second electronic device and are independent of each other. Both the first projection identifier and the second projection identifier correspond to a same manner of projection between the first electronic device and the second electronic device. The first distance is a distance within which the first electronic device and the third electronic device can communicate with each other in the first short-range wireless communication manner.

For beneficial effects of the eighth aspect, refer to related descriptions in the fourth aspect. Details are not described herein again.

In some implementations, the method further includes: The first electronic device sends the second search response message to the second electronic device in response to the second search request message. The first electronic device receives the first search response message from the second electronic device. The first electronic device sends, to the second electronic device in response to a first user input for the second projection identifier, a second projection request related to the second projection identifier.

In some implementations, the method further includes: The second electronic device sends the first search response message to the first electronic device in response to the first search request message. The second electronic device receives the second search response message from the first electronic device. The second electronic device sends, to the first electronic device in response to a second user input for the first projection identifier, a first projection request related to the first projection identifier.

In some implementations, the method further includes: The first electronic device sends, to the second electronic device in response to the first user input for the second projection identifier, the second projection request related to the second projection identifier, where the second projection request is used for projection by the first electronic device to the second electronic device.

In some implementations, the method further includes: The second electronic device sends, to the first electronic device in response to the second user input for the first projection identifier, the first projection request related to the first projection identifier, where the first projection request is used to request the first electronic device to project a screen to the second electronic device.

In some implementations, the sending of the first search request message and the sending of the second search response message run synchronously on the first electronic device and are independent of each other. The sending of the second search request message and the sending of the first search response message run synchronously on the second electronic device and are independent of each other.

In some implementations, the first search request message includes the first identification information, and the second search request message includes the second identification information.

In some implementations, the first search request message further includes: a standard packet start field, a forwarding host address field, a notification type field, a maximum waiting time field, a search target field, and a first projection identifier field. The second search request message further includes: a standard packet start field, a forwarding host address field, a notification type field, a maximum waiting time field, a search target field, and a second projection identifier field.

In some implementations, the first search response message includes the second identification information, and the second search response message includes the first identification information.

In some implementations, the first short-range wireless communication manner includes one of Bluetooth, near field communication, or a wireless network.

In some implementations, the first projection identifier includes a device name of the first electronic device.

In some implementations, the outputting first identification information related to the first electronic device includes: displaying the device name of the first electronic device on the second electronic device.

In some implementations, before the outputting first identification information related to the first electronic device, the second electronic device further performs the following operations: obtaining the output first identification information; and when the output first identification information includes third identification information related to the first electronic device, not outputting the third identification information related to the first electronic device; or when the output first identification information does not include third identification information related to the first electronic device, outputting the third identification information related to the first electronic device.

In some implementations, the second projection identifier includes a device name of the second electronic device.

In some implementations, the outputting second identification information related to the second electronic device includes: displaying the device name of the second electronic device on the first electronic device.

In some implementations, before the outputting second identification information related to the second electronic device, the first electronic device further performs the following operations: obtaining the output second identification information; and when the output second identification information includes fourth identification information related to the second electronic device, not outputting the fourth identification information related to the first electronic device; or when the output second identification information does not include fourth identification information related to the second electronic device, outputting the fourth identification information related to the second electronic device.

According to a ninth aspect, an embodiment of this application provides a first electronic device. The first electronic device includes: a first processor; a first memory, where the first memory is coupled to the first processor; and a first computer program, where the first computer program is stored in the first memory. When the first computer program is executed by the first processor, the first electronic device is enabled to perform the following operations: establishing, within a first distance from a second electronic device, a connection in a first short-range wireless communication manner to the second electronic device; sending a first search request message in a multicast or broadcast manner in response to the establishment of the connection in the first short-range wireless communication manner; receiving a second search request message from the second electronic device; and outputting, in response to the second search request message, second identification information related to the second electronic device, where the second identification information includes at least one second projection identifier. The second projection identifier corresponds to a manner of projection between the first electronic device and the second electronic device. The first distance is a distance within which the first electronic device and the second electronic device can communicate with each other in the first short-range wireless communication manner.

In some implementations, the first electronic device further performs the following operations: sending a second search response message to the second electronic device in response to the second search request message; receiving a first search response message from the second electronic device; and sending, to the second electronic device in response to a first user input for the second projection identifier, a second projection request related to the second projection identifier.

In some implementations, the first electronic device further performs the following operation: sending, to the second electronic device in response to the first user input for the second projection identifier, the second projection request related to the second projection identifier, where the second projection request is used for projection by the first electronic device to the second electronic device.

In some implementations, the sending of the first search request message and the sending of the second search response message run synchronously on the first electronic device and are independent of each other.

In some implementations, the first electronic device further performs the following operations: obtaining the output second identification information; and when the output second identification information includes fourth identification information related to the second electronic device, not outputting the fourth identification information related to the first electronic device; or when the output second identification information does not include fourth identification information related to the second electronic device, outputting the fourth identification information related to the second electronic device.

According to a tenth aspect, an embodiment of this application provides a second electronic device. The second electronic device includes: a second processor; a second memory, where the second memory is coupled to the second processor; and a second computer program, where the second computer program is stored in the second memory. When the second computer program is executed by the second processor, the second electronic device is enabled to perform the following operations:
establishing, within a first distance from a first electronic device, a connection in a first short-range wireless communication manner to the first electronic device; sending a second search request message in a multicast or broadcast manner in response to the establishment of the connection in the first short-range wireless communication manner; receiving a first search request message from the first electronic device; and outputting, in response to the first search request message, first identification information related to the first electronic device, where the first identification information includes at least one first projection identifier, the first projection identifier corresponds to a manner of projection between the first electronic device and the second electronic device; and the first distance is a distance within which the first electronic device and the second electronic device can communicate with each other in the first short-range wireless communication manner.

In some implementations, the second electronic device further performs the following operations: sending a first search response message to the first electronic device in response to the first search request message; receiving a second search response message from the first electronic device; and sending, to the first electronic device in response to a second user input for the first projection identifier, a first projection request related to the first projection identifier.

In some implementations, the second electronic device further performs the following operation: sending, to the first electronic device in response to the second user input for the first projection identifier, the first projection request related to the first projection identifier, where the first projection request is used for projection by the second electronic device to the first electronic device.

In some implementations, the sending of the second search request message and the sending of the first search response message run synchronously on the second electronic device and are independent of each other.

In some implementations, the second electronic device further performs the following operations: obtaining the output first identification information; and when the output first identification information includes third identification information related to the first electronic device, not outputting the third identification information related to the first electronic device; or when the output first identification information does not include third identification information related to the first electronic device, outputting the third identification information related to the first electronic device.

According to an eleventh aspect, an embodiment of this application provides a communication method, applied to the first electronic device provided in the ninth aspect. The method includes: The first electronic device establishes, within a first distance from a second electronic device, a connection in a first short-range wireless communication manner to the second electronic device. The first electronic device sends a first search request message in a multicast or broadcast manner in response to the establishment of the connection in the first short-range wireless communication manner. The first electronic device receives a second search request message from the second electronic device. The first electronic device outputs, in response to the second search request message, second identification information related to the second electronic device, where the second identification information includes at least one second projection identifier. The second projection identifier corresponds to a manner of projection between the first electronic device and the second electronic device. The first distance is a distance within which the first electronic device and the second electronic device can communicate with each other in the first short-range wireless communication manner.

In some implementations, the method further includes: The first electronic device sends a second search response message to the second electronic device in response to the second search request message. The first electronic device receives a first search response message from the second electronic device. The first electronic device sends, to the second electronic device in response to a first user input for the second projection identifier, a second projection request related to the second projection identifier.

In some implementations, the method further includes: The first electronic device sends, to the second electronic device in response to the first user input for the second projection identifier, the second projection request related to the second projection identifier, where the second projection request is used for projection by the first electronic device to the second electronic device.

In some implementations, the sending of the first search request message and the sending of the second search response message run synchronously on the first electronic device and are independent of each other.

In some implementations, the method further includes: The first electronic device obtains the output second identification information; and when the output second identification information includes fourth identification information related to the second electronic device, does not output the fourth identification information related to the first electronic device; or when the output second identification information does not include fourth identification information related to the second electronic device, outputs the fourth identification information related to the second electronic device.

According to a twelfth aspect, an embodiment of this application provides a communication method, applied to the second electronic device provided in the ninth aspect. The method includes: The second electronic device establishes, within a first distance from a first electronic device, a connection in a first short-range wireless communication manner to the first electronic device. The second electronic device sends a second search request message in a multicast or broadcast manner in response to the establishment of the connection in the first short-range wireless communication manner. The second electronic device receives a first search request message from the first electronic device. The second electronic device outputs, in response to the first search request message, first identification information related to the first electronic device, where the first identification information includes at least one first projection identifier. The first projection identifier corresponds to a manner of projection between the first electronic device and the second electronic device. The first distance is a distance within which the first electronic device and the second electronic device can communicate with each other in the first short-range wireless communication manner.

In some implementations, the method further includes: The second electronic device sends a first search response message to the first electronic device in response to the first search request message. The second electronic device receives the second search response message from the first electronic device. The second electronic device sends, to the first electronic device in response to a second user input for the first projection identifier, a first projection request related to the first projection identifier.

In some implementations, the method further includes: sending, to the first electronic device in response to the second user input for the first projection identifier, the first projection request related to the first projection identifier, where the first projection request is used for projection by the second electronic device to the first electronic device.

In some implementations, the sending of the second search request message and the sending of the first search response message run synchronously on the second electronic device and are independent of each other.

In some implementations, the method further includes: obtaining the output first identification information; and when the output first identification information includes third identification information related to the first electronic device, not outputting the third identification information related to the first electronic device; or when the output first identification information does not include third identification information related to the first electronic device, outputting the third identification information related to the first electronic device.

According to a thirteenth aspect, an embodiment of this application provides a computer-readable storage medium, applied to a first electronic device. The computer-readable storage medium stores a computer program, and when the computer program is executed by a processor, the first electronic device performs the method provided in the fifth aspect, the sixth aspect, the seventh aspect, the eighth aspect, or the eleventh aspect.

According to a fourteenth aspect, an embodiment of this application provides a computer-readable storage medium, applied to a second electronic device. The computer-readable storage medium stores a computer program, and when the computer program is executed by a processor, the second electronic device performs the method provided in the fifth aspect, the sixth aspect, the seventh aspect, the eighth aspect, or the twelfth aspect.

According to a fifteenth aspect, an embodiment of this application provides a computer program product. When the computer program product runs on a first electronic device, the first electrical device is enabled to perform the method provided in the fifth aspect, the sixth aspect, the seventh aspect, the eighth aspect, or the eleventh aspect.

According to a sixteenth aspect, an embodiment of this application provides a computer program product. When the computer program product runs on a second electronic device, the second electronic device is enabled to perform the method provided in the fifth aspect, the sixth aspect, the seventh aspect, the eighth aspect, or the twelfth aspect.

It may be understood that, for beneficial effects of the ninth aspect to the sixteenth aspect, refer to related descriptions in the first aspect to the fourth aspect. Details are not described herein again.

### BRIEF DESCRIPTION OF DRAWINGS

FIG. 1A and FIG. 1B show an application scenario of a communication system and a communication method according to an embodiment of this application;
FIG. 2 is a schematic diagram of a structure of an electronic device to which a communication system and a communication method are applied according to an embodiment of this application;
FIG. 3 is a schematic diagram of a software structure of an electronic device to which a communication system and a communication method are applied according to an embodiment of this application;
FIG. 4A and FIG. 4B are a schematic flowchart of a communication system and a communication method according to an embodiment of this application;
FIG. 5 is a schematic diagram of a scenario in which a first electronic device displays device information of a second electronic device according to an embodiment of this application;
FIG. 6 is a schematic diagram of a scenario in which a second electronic device displays device information of a first electronic device according to an embodiment of this application;
FIG. 7 is a schematic diagram of another scenario in which a first electronic device displays device information of a second electronic device according to an embodiment of this application;
FIG. 8 is a schematic flowchart of applying a communication system and a communication method to projection according to an embodiment of this application;
FIG. 9 is a schematic diagram of a projection direction selection interface according to an embodiment of this application;
FIG. 10 is a block diagram of a structure of a communication apparatus applied to a first electronic device according to an embodiment of this application;
FIG. 11 is a block diagram of a structure of a communication apparatus applied to a second electronic device according to an embodiment of this application; and
FIG. 12 is a block diagram of a structure of an electronic device according to an embodiment of this application.

### DESCRIPTION OF EMBODIMENTS

In the following descriptions, for illustration instead of limitation, specific details such as a particular system structure and a technology are provided to facilitate a thorough understanding of embodiments of this application. However, a person skilled in the art should know that this application may also be implemented in other embodiments without these specific details. In other cases, detailed descriptions of well-known systems, apparatuses, circuits, and methods are omitted, so that this application is described without being obscured by unnecessary details.

It should be understood that the term "and/or" used in the specification and the appended claims of this application indicates any combination and all possible combinations of one or more items listed in association, and includes the combinations.

As used in the specification and the appended claims of this application, according to the context, the term "if" may be interpreted as "when" or "once" or "in response to determining" or "in response to detecting".

In addition, in the descriptions of the specification and the appended claims of this application, the terms "first", "second", "third", and the like are merely intended for a purpose of differentiated description, but shall not be understood as an indication or an implication of relative importance.

Reference to "an embodiment", "some embodiments", or the like described in the specification of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment, but mean "one or more but not all of embodiments", unless otherwise specifically emphasized in another manner. The terms "include", "contain", "have", and their variants all mean "include but are not limited to", unless otherwise specifically emphasized in another manner.

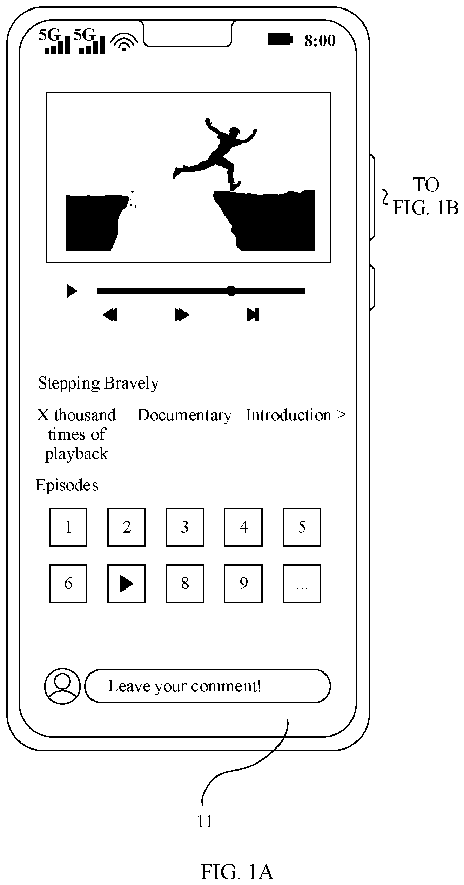

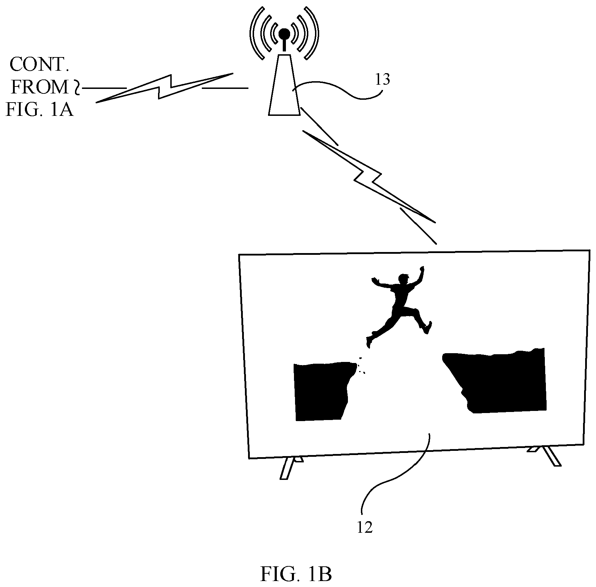

For example, FIG. 1A and FIG. 1B show an application scenario of a communication system and a communication method. Refer to FIG. 1A and FIG. 1B. A first electronic device 11 is connected to a network device 13, a second electronic device 12 is also connected to the network device 13, and the first electronic device 11 and the second electronic device 12 may be in a same local area network. Alternatively, the first electronic device 11 and the second electronic device 12 may be in different local area networks. When the first electronic device 11 and the second electronic device 12 are in different local area networks, transparent transmission needs to be implemented between the two local area networks, that is, devices in the two local area networks may be communicatively connected.

The first electronic device 11 and the second electronic device 12 each may be an electronic device that supports a multi-device collaboration technology, such as a smartphone, a notebook computer, a desktop computer, a tablet computer, a wearable device, a vehicle-mounted device, an ultra-mobile personal computer (ultra-mobile personal computer, UMPC), a netbook, a personal digital assistant (personal digital assistant, PDA), a smart television, a projection device, or an augmented reality (augmented reality, AR)/virtual reality (virtual reality, VR) device. Specific types of the first electronic device 11 and the second electronic device 12 are not limited in embodiments of this application. The network device 13 may be a network device that can provide a local area network access function, for example, a wireless router, an access point, or a wireless access point.

The multi-device collaboration technology may include a digital living network alliance (digital living network alliance, DLNA), cast+ (CAST+), airplay (Airplay), and the like, but is not limited thereto.

In some implementations, the communication system and method may be applied to a projection scenario. When the communication system and method are applied to projection, the first electronic device 11 is a transmit end device, and the second electronic device 12 is a receive end device. After receiving a projection instruction from a user, the first electronic device 11 searches a local area network for at least one second electronic device 12 that may be used for projection, and projects a screen to the second electronic device 12. It should be noted that, the communication system and method provided in this application may be further applied to another device search scenario, for example, a device pairing scenario or an air drop scenario.

In the conventional technology, after responding to the projection instruction, the first electronic device 11 multicasts (Multicasts) a search request in the local area network. After receiving the search request, the at least one second electronic device 12 sends, that is, unicasts (Unicasts), a search response message to the first electronic device 11. The first electronic device 11 displays, on a screen based on the received search response message, information about each second electronic device 12 that can be used for projection. Then, the first electronic device 11 receives a projection confirmation instruction from the user, and determines a second electronic device 12 to which a screen is to be projected. The first electronic device 11 sends projection information to the determined second electronic device 12 through the network device 13. After receiving the projection information from the first electronic device, the second electronic device 12 displays a projection picture on a screen.

However, if a packet loss is caused due to an unstable network environment of the local area network, there may be a delay when the search request multicast by the first electronic device 11 is sent to a device in the local area network, or the search request multicast by the first electronic device 11 is lost during transmission. The search response message sent by the second electronic device 12 to the first electronic device 11 may also be delayed or lost. As a result, the first electronic device 11 cannot quickly and effectively search for the second electronic device 12 that can be used.

The unstable network environment of the local area network may include cases such as excessive data traffic in the local area network, a poor network signal of a device that accesses the local area network in a wireless manner, and the like.

Therefore, this application provides a communication system and a communication method, including:
A first electronic device establishes, within a first distance from a second electronic device, a connection in a first short-range wireless communication manner to the second electronic device. In response to the establishment of the connection in the first short-range wireless communication manner, the first electronic device and the second electronic device respectively send a first search request message and a second search request message in a multicast or broadcast manner. The first electronic device receives the second search request message from the second electronic device. The first electronic device outputs, in response to the second search request message, second identification information related to the second electronic device, where the second identification information includes at least one second projection identifier. The second electronic device receives the first search request message from the first electronic device. The second electronic device outputs, in response to the first search request message, first identification information related to the first electronic device, where the first identification information includes at least one first projection identifier. Both the first projection identifier and the second projection identifier correspond to a same manner of projection between the first electronic device and the second electronic device. The first distance is a distance within which the first electronic device and the second electronic device can communicate with each other in the first short-range wireless communication manner.

In this application, the first electronic device sends the first search request message in the multicast or broadcast manner in response to the establishment of the connection in the first short-range wireless communication manner. The second electronic device sends the second search request message in the multicast or broadcast manner in response to the establishment of the connection in the first short-range wireless communication manner. The first electronic device and the second electronic device perform a two-way search in response to a same action. In addition, the first search request message multicast or broadcast by the first electronic device includes the first identification information, and the second search request message multicast or broadcast by the second electronic device includes the second identification information. Therefore, after the first electronic device receives the second search request message or the second electronic device receives the first search request message, projection may be performed based on the identification information in the search request message. This can effectively reduce a probability of a projection search failure, and improve device projection search efficiency.

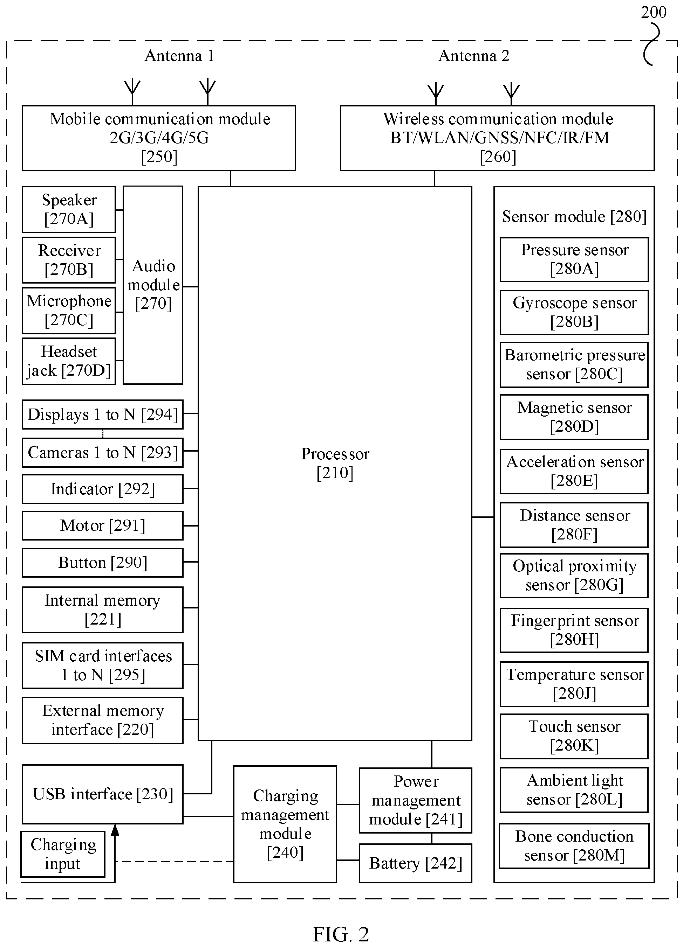

For example, FIG. 2 is a schematic diagram of a structure of an electronic device to which a communication system and a communication method are applied. In FIG. 2, the electronic device 200 may be a first electronic device or a second electronic device. The electronic device 200 may include a processor 210, an external memory interface 220, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display 294, a subscriber identification module (subscriber identification module, SIM) card interface 295, and the like. The sensor module 280 may include a pressure sensor 280A, a gyroscope sensor 280B, a barometric pressure sensor 280C, a magnetic sensor 280D, an acceleration sensor 280E, a distance sensor 280F, an optical proximity sensor 280G, a fingerprint sensor 280H, a temperature sensor 280J, a touch sensor 280K, an ambient light sensor 280L, a bone conduction sensor 280M, and the like.

It may be understood that, the structure shown in this embodiment of this application does not constitute a specific limitation on the electronic device 200. In some other embodiments of this application, the electronic device 200 may include more or fewer components than those shown in the figure, or combine some components, or split some components, or have different component arrangements. The components shown in the figure may be implemented by using hardware, software, or a combination of software and hardware.

For example, when the electronic device 200 is a mobile phone, a tablet computer, or a smart TV, the electronic device 200 may include all components in the figure, or may include only some components in the figure.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 200. The controller may generate an operation control signal based on an instruction operation code and a time sequence signal, to complete control of instruction reading and instruction execution.

A memory may be further disposed in the processor 210, and is configured to store instructions and data. In some embodiments, the memory in the processor 210 is a cache. The memory may store instructions or data just used or cyclically used by the processor 210. If the processor 210 needs to use the instructions or the data again, the processor 210 may directly invoke the instructions or the data from the memory. This avoids repeated access and reduces waiting time of the processor 210, thereby improving system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 210 may include a plurality of groups of I2C buses. The processor 210 may be separately coupled to the touch sensor 280K, a charger, a flash, the camera 293, and the like through different I2C bus interfaces. For example, the processor 210 may be coupled to the touch sensor 280K through the I2C interface, so that the processor 210 communicates with the touch sensor 280K through the I2C bus interface, to implement a touch function of the electronic device 200.

The I2S interface may be used for audio communication. In some embodiments, the processor 210 may include a plurality of groups of I2S buses. The processor 210 may be coupled to the audio module 270 through the I2S bus, to implement communication between the processor 210 and the audio module 270. In some embodiments, the audio module 270 may transmit an audio signal to the wireless communication module 260 through the I2S interface.

The PCM interface may also be used for audio communication, and sample, quantize, and code an analog signal. In some embodiments, the audio module 270 may be coupled to the wireless communication module 260 through a PCM bus interface.

In some embodiments, the audio module 270 may also transmit an audio signal to the wireless communication module 260 through the PCM interface. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication.

In some embodiments, the UART interface is usually configured to connect the processor 210 and the wireless communication module 260. For example, the processor 210 communicates with a Bluetooth module in the wireless communication module 260 through the UART interface, to implement a Bluetooth function. In some embodiments, the audio module 270 may transmit an audio signal to the wireless communication module 260 through the UART interface, to implement a function of playing music by using a Bluetooth headset.

The MIPI interface may be configured to connect the processor 210 and a peripheral component like the display 294 or the camera 293. The MIPI interface includes a camera serial interface (camera serial interface, CSI), a display serial interface (display serial interface, DSI), and the like. In some embodiments, the processor 210 communicates with the camera 293 through the CSI interface, to implement an image shooting function of the electronic device 200. The processor 210 communicates with the display 294 through the DSI interface, to implement a display function of the electronic device 200.

The GPIO interface may be configured by software. The GPIO interface may be configured as a control signal or a data signal. In some embodiments, the GPIO interface may be configured to connect the processor 210 to the camera 293, the display 294, the wireless communication module 260, the audio module 270, the sensor module 280, or the like. The GPIO interface may alternatively be configured as an I2C interface, an I2S interface, a UART interface, an MIPI interface, or the like.

The USB interface 230 is an interface that conforms to a USB standard specification, and may be specifically a mini USB interface, a micro USB interface, a USB Type-C interface, or the like. The USB interface 230 may be configured to connect to a charger to charge the electronic device 200, or may be configured to perform data transmission between the electronic device 200 and a peripheral device, or may be configured to connect to a headset for playing audio by using the headset. The interface may be further configured to connect to another electronic device like an AR device.

It may be understood that an interface connection relationship between the modules that is shown in this embodiment of this application is merely an example for description, and does not constitute a limitation on a structure of the electronic device 200. In some other embodiments of this application, the electronic device 200 may alternatively use an interface connection manner different from an interface connection manner in this embodiment, or a combination of a plurality of interface connection manners.

The charging management module 240 is configured to receive a charging input from a charger. The charger may be a wireless charger or a wired charger. In some embodiments of wired charging, the charging management module 240 may receive a charging input of a wired charger through the USB interface 230. In some embodiments of wireless charging, the charging management module 240 may receive a wireless charging input by using a wireless charging coil of the electronic device 200. The charging management module 240 supplies power to the electronic device by using the power management module 241 while charging the battery 242.

The power management module 241 is configured to connect to the battery 242, the charging management module 240, and the processor 210. The power management module 241 receives an input of the battery 242 and/or the charging management module 240, to supply power to the processor 210, the internal memory 221, an external memory, the display 294, the camera 293, the wireless communication module 260, and the like. The power management module 241 may be further configured to monitor parameters such as a battery capacity, a battery cycle count, and a battery health status (an electric leakage or impedance).

In some other embodiments, the power management module 241 may alternatively be disposed in the processor 210. In some other embodiments, the power management module 241 and the charging management module 240 may alternatively be disposed in a same component.

A wireless communication function of the electronic device 200 may be implemented by using the antenna 1, the antenna 2, the mobile communication module 250, the wireless communication module 260, the modem processor, the baseband processor, and the like.

The antenna 1 and the antenna 2 are configured to transmit and receive an electromagnetic wave signal. Each antenna in the electronic device 200 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 250 may provide a wireless communication solution that includes 2G/3G/4G/5G or the like and that is applied to the electronic device 200. The mobile communication module 250 may include at least one filter, a switch, a power amplifier, a low noise amplifier (low noise amplifier, LNA), and the like. The mobile communication module 250 may receive an electromagnetic wave through the antenna 1, perform processing such as filtering or amplification on the received electromagnetic wave, and transmit the electromagnetic wave to the modem processor for demodulation. The mobile communication module 250 may further amplify a signal modulated by the modem processor, and convert the signal into an electromagnetic wave for radiation through the antenna 1.

In some embodiments, at least some functional modules in the mobile communication module 250 may be disposed in the processor 210. In some embodiments, at least some functional modules in the mobile communication module 250 may be disposed in a same component as the at least some modules in the processor 210.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (not limited to the speaker 270A, the receiver 270B, or the like), or displays an image or a video by using the display 294. In some embodiments, the modem processor may be an independent component. In some other embodiments, the modem processor may be independent of the processor 210, and is disposed in a same component as the mobile communication module 250 or another functional module.

The wireless communication module 260 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 200. The wireless communication module 260 may be one or more components integrating at least one communication processing module. The wireless communication module 260 receives an electromagnetic wave through the antenna 2, performs frequency modulation and filtering processing on an electromagnetic wave signal, and sends a processed signal to the processor 210. The wireless communication module 260 may further receive a to-be-sent signal from the processor 210, perform frequency modulation and amplification on the signal, and convert the signal into an electromagnetic wave for radiation through the antenna 2.

In some embodiments, in the electronic device 200, the antenna 1 is coupled to the mobile communication module 250, and the antenna 2 is coupled to the wireless communication module 260, so that the electronic device 200 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 200 implements a display function by using the GPU, the display 294, the application processor, and the like. The GPU is a microprocessor for image processing, and is connected to the display 294 and the application processor. The GPU is configured to: perform mathematical and geometric computation, and render an image. The processor 210 may include one or more GPUs that execute program instructions to generate or change display information.

The display 294 is configured to display an image, a video, and the like, for example, a teaching video and a user action picture video in embodiments of this application, and the display 294 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 200 may include one or N displays 294, where N is a positive integer greater than 1.

The electronic device 200 may implement an image shooting function by using the ISP, the camera 293, the video codec, the GPU, the display 294, the application processor, and the like.

The ISP is configured to process data fed back by the camera 293. For example, during photographing, a shutter is pressed, light is transferred to a camera photosensitive element through a lens, an optical signal is converted into an electrical signal, and the camera photosensitive element transmits the electrical signal to the ISP for processing, to convert the electrical signal into an image visible to a naked eye. The ISP may further perform algorithm optimization on noise, brightness, and complexion of the image. The ISP may further optimize parameters such as exposure and a color temperature of an image shooting scenario. In some embodiments, the ISP may be disposed in the camera 293.

The camera 293 is configured to capture a static image or a video. An optical image of an object is generated through the lens, and is projected onto the photosensitive element. A focal length of the lens may indicate a framing range of the camera. A smaller focal length of the lens indicates a larger framing range of the lens. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV.

In this application, the electronic device 200 may include the camera 293 with two or more focal lengths.

The digital signal processor is configured to process a digital signal, and may process another digital signal in addition to the digital image signal. For example, when the electronic device 200 selects a frequency, the digital signal processor is configured to perform Fourier transform on frequency energy and the like.

The video codec is configured to compress or decompress a digital video. The electronic device 200 may support one or more video codecs. In this way, the electronic device 200 can play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. The NPU can implement applications such as intelligent cognition of the electronic device 200, such as image recognition, facial recognition, speech recognition, and text understanding.

In this embodiment of this application, the NPU or another processor may be configured to perform operations such as analysis processing on an image in a video stored in the electronic device 200.

The external memory interface 220 may be configured to connect to an external storage card, for example, a Micro SD card, to extend a storage capability of the electronic device 200. The external storage card communicates with the processor 210 through the external memory interface 220, to implement a data storage function. For example, files such as music and videos are stored in the external storage card.

The internal memory 221 may be configured to store computer-executable program code, where the executable program code includes instructions. The processor 210 runs the instructions stored in the internal memory 221, to perform various function applications of the electronic device 200 and data processing. The internal memory 221 may include a program storage area and a data storage area. The program storage area may store an operating system, and an application required by at least one function (for example, a sound playing function or an image playing function). The data storage area may store data (such as audio data and a phone book) created when the electronic device 200 is used.

In addition, the internal memory 221 may include a high-speed random access memory, or may include a nonvolatile memory, for example, at least one magnetic disk storage device, a flash memory, or a universal flash storage (universal flash storage, UFS).

The electronic device 200 may implement an audio function by using the audio module 270, the speaker 270A, the receiver 270B, the microphone 270C, the headset jack 270D, the application processor, and the like.

The audio module 270 is configured to convert a digital audio signal into an analog audio signal for output, and is also configured to convert an analog audio input into a digital audio signal. The audio module 270 may be further configured to encode and decode an audio signal. In some embodiments, the audio module 270 may be disposed in the processor 210, or some functional modules in the audio module 270 are disposed in the processor 210.

The speaker 270A, also referred to as a "loudspeaker", is configured to convert an audio electrical signal into a sound signal. The electronic device 200 may be used to listen to music or answer a call in a hands-free mode over the speaker 270A. For example, the speaker may play a comparison analysis result provided in embodiments of this application.

The receiver 270B, also referred to as an "earpiece", is configured to convert the audio electrical signal into the sound signal. When a call is answered or voice information is received by using the electronic device 200, the receiver 270B may be put close to a human ear to listen to a voice.

The microphone 270C, also referred to as a "mike" or a "mic", is configured to convert a sound signal into an electrical signal. When making a call or sending voice information, a user may make a sound near the microphone 270C through the mouth of the user, to input the sound signal to the microphone 270C. At least one microphone 270C may be disposed in the electronic device 200. In some other embodiments, two microphones 270C may be disposed in the electronic device 200, to collect a sound signal and further implement a noise reduction function. In some other embodiments, three, four, or more microphones 270C may alternatively be disposed in the electronic device 200, to collect a sound signal, reduce noise, identify a sound source, implement a directional recording function, and the like.

The headset jack 270D is configured to connect to a wired headset. The headset jack 270D may be the USB interface 230, or may be a 3.5 mm open mobile electronic device platform (open mobile terminal platform, OMTP) standard interface or a cellular telecommunications industry association of the USA (cellular telecommunications industry association of the USA, CTIA) standard interface.

The pressure sensor 280A is configured to sense a pressure signal, and may convert the pressure signal into an electrical signal. In some embodiments, the pressure sensor 280A may be disposed on the display 294. There are many types of pressure sensors 280A, such as a resistive pressure sensor, an inductive pressure sensor, and a capacitive pressure sensor. The capacitive pressure sensor may include at least two parallel plates made of conductive materials. When a force is applied to the pressure sensor 280A, capacitance between electrodes changes. The electronic device 200 determines pressure intensity based on the change in the capacitance. When a touch operation is performed on the display 294, the electronic device 200 detects intensity of the touch operation based on the pressure sensor 280A. The electronic device 200 may also calculate a touch position based on a detection signal of the pressure sensor 280A.

In some embodiments, touch operations that are performed in a same touch position but have different touch operation intensity may correspond to different operation instructions. For example, when a touch operation whose touch operation intensity is less than a first pressure threshold is performed on an icon of Messages, an instruction for viewing an SMS message is performed. When a touch operation whose touch operation intensity is greater than or equal to the first pressure threshold is performed on the icon of Messages, an instruction for creating an SMS message is performed.

The gyroscope sensor 280B may be configured to determine a motion posture of the electronic device 200. In some embodiments, an angular velocity of the electronic device 200 around three axes (namely, x, y, and z axes) may be determined by using the gyroscope sensor 280B. The gyroscope sensor 280B may be configured to implement image stabilization during image shooting. For example, when the shutter is pressed, the gyroscope sensor 280B detects an angle at which the electronic device 200 jitters, obtains, through calculation based on the angle, a distance for which a lens module needs to compensate, and allows the lens to cancel the jitter of the electronic device 200 through reverse motion, to implement image stabilization. The gyroscope sensor 280B may also be used in a navigation scenario and a somatic game scenario.

The barometric pressure sensor 280C is configured to measure atmospheric pressure. In some embodiments, the electronic device 200 calculates an altitude by using a value of the atmospheric pressure measured by the barometric pressure sensor 280C, to assist positioning and navigation.

The magnetic sensor 280D includes a Hall effect sensor. The electronic device 200 may detect opening and closing of a flip leather case by using the magnetic sensor 280D. In some embodiments, when the electronic device 200 is a clamshell phone, the electronic device 200 may detect opening and closing of a flip cover by using the magnetic sensor 280D. Further, a feature like automatic unlocking of the flip cover is set based on a detected opening or closing state of the leather case or a detected opening or closing state of the flip cover.

The acceleration sensor 280E may detect magnitude of accelerations in various directions (usually on three axes) of the electronic device 200, and may detect magnitude and a direction of gravity when the electronic device 200 is static. The acceleration sensor 280E may be further configured to recognize a posture of the electronic device, and is used in an application such as switching between a landscape mode and a portrait mode or a pedometer.

The distance sensor 280F is configured to measure a distance. The electronic device 200 may measure a distance in an infrared manner or a laser manner. In some embodiments, in an image shooting scenario, the electronic device 200 may measure a distance by using the distance sensor 280F to implement fast focusing.

The optical proximity sensor 280G may include, for example, a light emitting diode (LED) and an optical detector, for example, a photodiode. The light emitting diode may be an infrared light emitting diode. The electronic device 200 emits infrared light by using the light emitting diode. The electronic device 200 detects infrared reflected light from a nearby object by using the photodiode. When detecting sufficient reflected light, the electronic device 200 may determine that there is an object near the electronic device 200. When detecting insufficient reflected light, the electronic device 200 may determine that there is no object near the electronic device 200. The electronic device 200 may detect, by using the optical proximity sensor 280G, that a user holds the electronic device 200 close to an ear to make a call, to automatically turn off a screen for power saving. The optical proximity sensor 280G may also be used for automatic screen unlocking and locking in a smart cover mode or a pocket mode.

The ambient light sensor 280L is configured to sense ambient light brightness. The electronic device 200 may adaptively adjust brightness of the display 294 based on the sensed ambient light brightness. The ambient light sensor 280L may also be configured to automatically adjust white balance during photographing. The ambient light sensor 280L may also cooperate with the optical proximity sensor 280G to detect whether the electronic device 200 is in a pocket to prevent an accidental touch.

The fingerprint sensor 280H is configured to collect a fingerprint. The electronic device 200 may use a feature of the collected fingerprint to implement fingerprint-based unlocking, application lock access, fingerprint-based photographing, fingerprint-based call answering, and the like.

The temperature sensor 280J is configured to detect a temperature. In some embodiments, the electronic device 200 executes a temperature processing policy by using the temperature detected by the temperature sensor 280J. For example, when the temperature reported by the temperature sensor 280J exceeds a threshold, the electronic device 200 lowers performance of a processor located near the temperature sensor 280J, to reduce power consumption and implement thermal protection. In some other embodiments, when the temperature is less than another threshold, the electronic device 200 heats the battery 242, to avoid a case in which the electronic device 200 is shut down abnormally due to a low temperature. In some other embodiments, when the temperature is less than still another threshold, the electronic device 200 boosts an output voltage of the battery 242, to avoid an abnormal shutdown caused by a low temperature.

The touch sensor 280K is also referred to as a "touch panel". The touch sensor 280K may be disposed in the display 294, and the touch sensor 280K and the display 294 form a touchscreen, which is also referred to as a "touch screen". The touch sensor 280K is configured to detect a touch operation performed on or near the touch sensor 280K. The touch sensor may transfer the detected touch operation to the application processor to determine a type of the touch event. A visual output related to the touch operation may be provided by using the display 294. In some other embodiments, the touch sensor 280K may alternatively be disposed on a surface of the electronic device 200, or disposed in a position different from the display 294.

The bone conduction sensor 280M may obtain a vibration signal. In some embodiments, the bone conduction sensor 280M may obtain a vibration signal of a vibration bone of a human vocal part. The bone conduction sensor 280M may also contact a pulse of a human body and receive a blood pressure pulse signal.

In some embodiments, the bone conduction sensor 280M may also be disposed in the headset, to combine into a bone conduction headset. The audio module 270 may parse out a voice signal based on the vibration signal of the vibration bone of the vocal part that is obtained by the bone conduction sensor 280M, to implement a voice function. The application processor may parse heart rate information based on the blood pressure pulse signal obtained by the bone conduction sensor 280M, to implement a heart rate detection function.

The button 290 includes a power button, a volume button, and the like. The button 290 may be a mechanical button, or may be a touch button. The electronic device 200 may receive a button input, and generate a button signal input related to a user setting and function control of the electronic device 200.

The motor 291 may generate a vibration prompt. The motor 291 may be configured to provide an incoming call vibration prompt and a touch vibration feedback. For example, touch operations performed on different applications (for example, photographing and audio playing) may correspond to different vibration feedback effects. The motor 291 may also correspond to different vibration feedback effects for touch operations performed on different areas of the display 294. Different application scenarios (for example, a time reminder, information receiving, an alarm clock, and a game) may also correspond to different vibration feedback effects. A touch vibration feedback effect may be further customized.

The indicator 292 may be an indicator light, may be configured to indicate a charging status and a battery level change, and may also be configured to indicate a message, a missed call, a notification, and the like.

The SIM card interface 295 is configured to connect to a SIM card. The SIM card may be inserted into the SIM card interface 295 or removed from the SIM card interface 295, to implement contact with or separation from the electronic device 200. The electronic device 200 may support one or N SIM card interfaces, where N is a positive integer greater than 1. The SIM card interface 295 may support a nano-SIM card, a micro-SIM card, a SIM card, and the like. A plurality of cards may be simultaneously inserted into a same SIM card interface 295. The plurality of cards may be of a same type or of different types. The SIM card interface 295 may also be compatible with different types of SIM cards. The SIM card interface 295 may also be compatible with the external storage card. The electronic device 200 interacts with a network by using the SIM card, to implement a call function, a data communication function, and the like. In some embodiments, the electronic device 200 uses an eSIM, that is, an embedded SIM card. The eSIM card may be embedded into the electronic device 200, and cannot be separated from the electronic device 200.

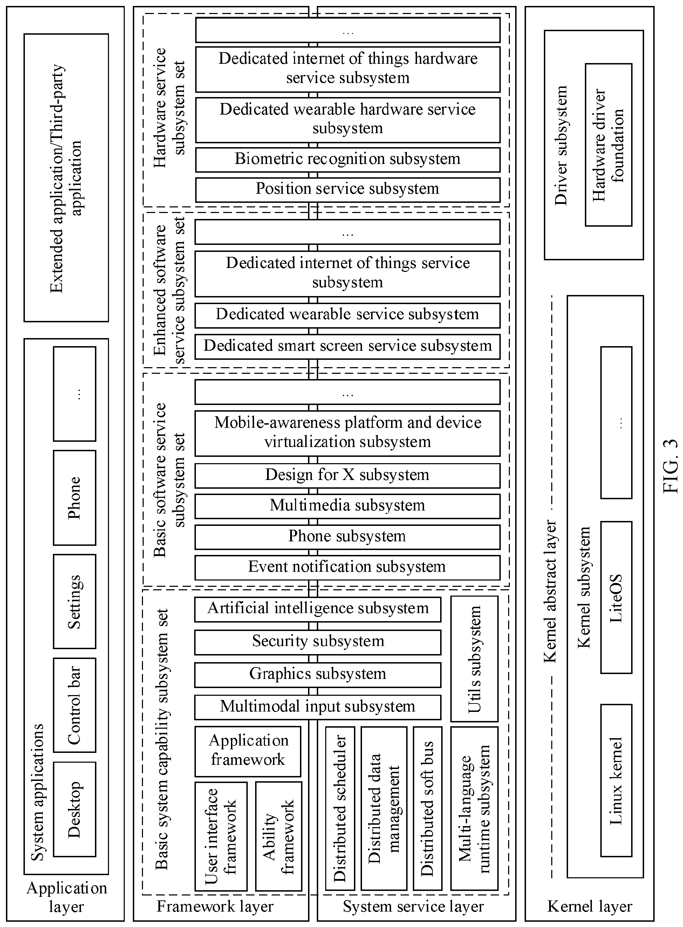

For example, FIG. 3 is a schematic diagram of a software structure of an electronic device to which a communication system and a communication method are applied according to an embodiment of this application. An operating system in a first electronic device or a second electronic device may be an Android (Android) system, a Microsoft Windows (Windows) system, Apple iOS (iOS), HarmonyOS (HarmonyOS), or the like. Herein, an example in which the operating system of the first electronic device or the second electronic device is HarmonyOS is used for description.

In some embodiments, the HarmonyOS may be divided into four layers, including a kernel layer, a system service layer, a framework layer, and an application layer. Layers communicate with each other through a software interface.

As shown in FIG. 3, the kernel layer includes a kernel abstract layer (Kernel Abstract Layer, KAL) and a driver subsystem. The KAL includes a plurality of kernels, such as a Linux kernel of a Linux system and a LiteOS kernel of a lightweight IoT system. The driver subsystem may include a hardware driver foundation (Hardware Driver Foundation, HDF). The hardware driver foundation can allows unified access from peripheral devices and provides foundation for driver development and management. A multi-kernel kernel layer may select a corresponding kernel for processing based on a system requirement.

The system service layer is a core capability set of the HarmonyOS. The system service layer provides services for applications through the framework layer. The layer may include:
a basic system capability subsystem set: which provides basic capabilities for running, scheduling, and migrating distributed applications on a plurality of devices running the HarmonyOS, and may include subsystems such as a distributed soft bus, distributed data management, distributed scheduler, a multi-language runtime, Utils, a multimodal input, graphics, security, artificial intelligence (Artificial Intelligence, AI), and an application framework, where the multi-language runtime provides a C or C++ or JavaScript (JS) multi-language runtime and a basic system class library, and may also provide a runtime for a static Java program (namely, a part of an application or the framework layer that is developed using Java language) that uses a compiler;
a basic software service subsystem set: which provides common and universal software services for the HarmonyOS, and may include subsystems such as event notification, telephony, multimedia, design for X (Design For X, DFX), and MSDP&DV;
an enhanced software service subsystem set: which provides the HarmonyOS with differentiated enhanced software services for different devices, and may include subsystems such as a dedicated smart screen service, a dedicated wearable service, and a dedicated internet of things (Internet of Things, IoT) service; and
a hardware service subsystem set: which provides hardware services for the HarmonyOS, and may include subsystems such as a position service, biometric recognition, a dedicated wearable hardware service, and a dedicated IoT hardware service.

The framework layer provides HarmonyOS application development with an application framework and an ability (Ability) framework with a plurality of languages such as Java, C, C++, and JS, two user interface (User Interface, UI) frameworks (including a Java UI framework for Java language and a JS UI framework for JS language), and various multi-language framework application programming interfaces (Application Programming Interfaces, APIs) for software and hardware services. APIs available for HarmonyOS devices vary based on component-based tailoring degrees of the system.

The application layer includes a system application and a third-party non-system application. The system application may include applications that are installed by default on an electronic device such as Desktop, Control bar, Settings, Phone, and the like. An extended application may be an unnecessary application developed and designed by the manufacturer of the electronic device, for example, Electronic device manager, Device replacement and migration, Notes, and Weather. The third-party non-system application may be an application that is developed by another manufacturer but can run in the HarmonyOS, for example, Games, Navigation, a social application, or a shopping application.

A HarmonyOS application includes one or more feature abilities (Feature Abilities, FAs) or particle abilities (Particle Abilities, PAs). The FA has a UI, and provides a capability of interacting with a user. However, the PA does not have a UI, and provides a background task running capability and unified data access abstraction. The PA mainly provides support for the FA, for example, provides a computing capability as a background service or provides a data access capability as a data warehouse. An application developed based on the FA or PA can implement a specific service function, support cross-device scheduling and distribution, and provide consistent and efficient application experience for the user.

Between a plurality of electronic devices running the HarmonyOS, hardware mutual assistance and resource sharing may be implemented by using the distributed soft bus, distributed device virtualization, distributed data management, and distributed scheduler.

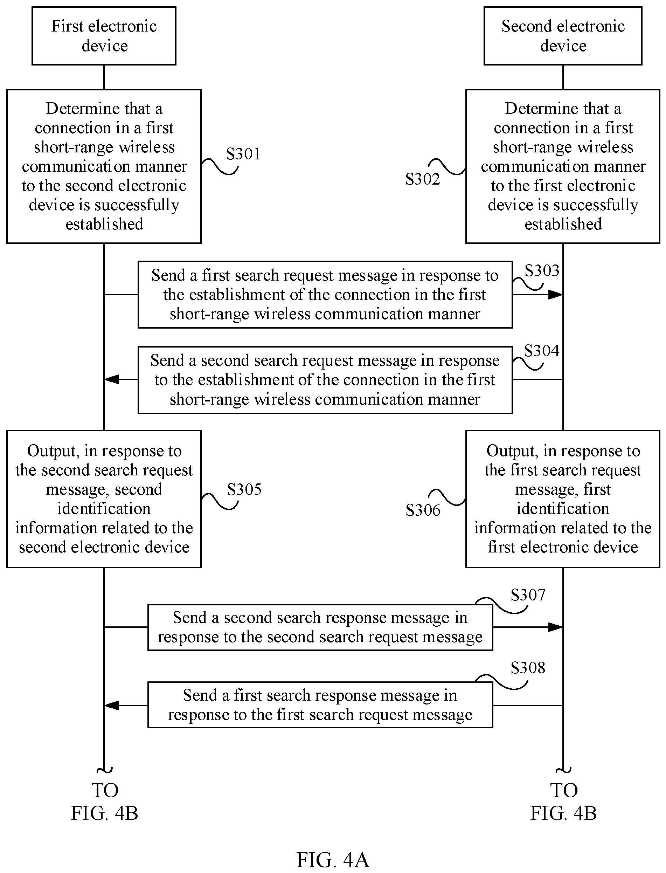

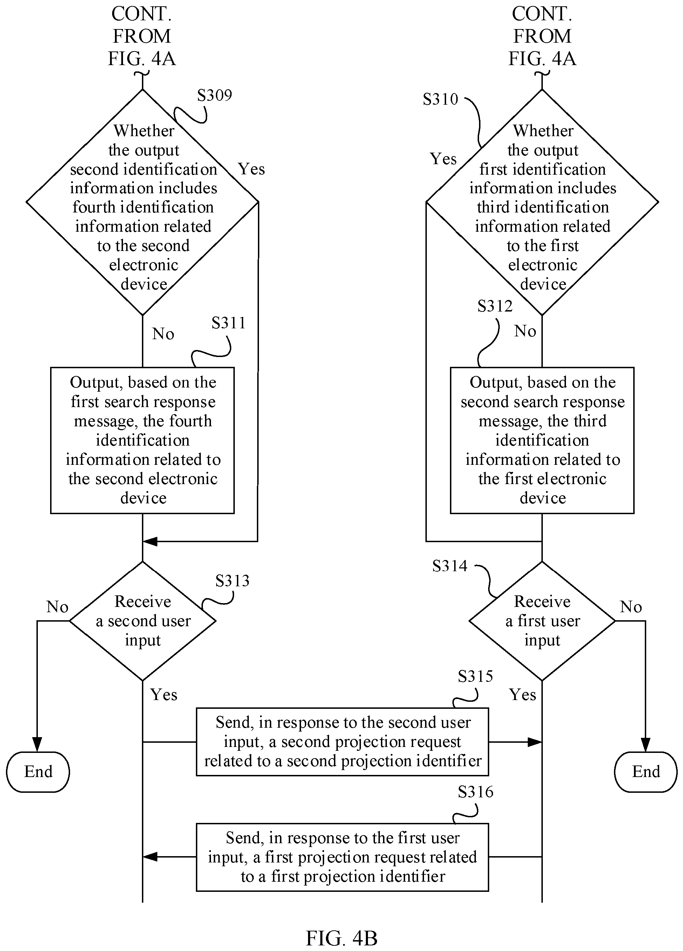

For example, FIG. 4A and FIG. 4B are a schematic flowchart of a communication system and a communication method according to this application. By way of example, and not limitation, the method may be applied to the first electronic device and the second electronic device.

It should be noted that, the communication system and the communication method provided in this application may be applied to a plurality of scenarios of searching for a device in a local area network, and in particular, are applicable to a projection scenario. In this application, a projection scenario is used as an example for description, but this is not limited thereto.

It should be further noted that a quantity of first electronic devices and a quantity of second electronic devices are not limited in this application. For example, one first electronic device may search for a plurality of second electronic devices, or a plurality of first electronic devices may search for one second electronic device, or a plurality of first electronic devices may search for a plurality of second electronic devices. This is not limited herein.

In some implementations, to implement the communication system and the communication method provided in this application, a device search program corresponding to this method may be integrated into a device in a form of a system component or an application. For example, the device search program may be integrated into an operating system as a system component, or integrated into a third-party application in a form of code, where the third-party application may be a video playing application, a projection application, a live broadcast application, or the like. This is not limited herein.

Refer to FIG. 4A and FIG. 4B. The communication system and the communication method include:
S301: The first electronic device determines that a connection in a first short-range wireless communication manner to the second electronic device is successfully established.
S302: The second electronic device determines that a connection in a first short-range wireless communication manner to the first electronic device is successfully established.

In some implementations, that the connection between the first electronic device and the second electronic device in the first short-range wireless communication manner is successfully established may be that a distance between the first electronic device and the second electronic device is less than a first distance. The first short-range wireless communication manner includes one of Bluetooth (Bluetooth), near field communication (Near Field Communication, NFC), or a wireless network (Wi-Fi).

For example, when both the first electronic device and the second electronic device support Bluetooth, and the distance between the first electronic device and the second electronic device is less than the first distance (in other words, the first electronic device and the second electronic device may communicate with each other by using Bluetooth), the first electronic device and the second electronic device may establish a connection by using Bluetooth. Alternatively, the distance between the first electronic device and the second electronic device may be obtained based on strength of a Bluetooth communication signal between the first electronic device and the second electronic device. When the distance between the first electronic device and the second electronic device is less than a second distance, the first electronic device and the second electronic device may establish a connection by using Bluetooth.

In some other implementations, the first electronic device may establish a connection to an auxiliary device (a third electronic device) of the second electronic device in the first short-range wireless communication manner. After the first electronic device establishes the connection to the third electronic device in the first short-range wireless communication manner, the second electronic device determines, through the third electronic device, that the connection to the first electronic device in the first short-range wireless communication manner is successfully established.

For example, it is assumed that the first electronic device is a smartphone, and the smartphone supports Bluetooth and NFC functions. The second electronic device is a smart TV, the smart TV supports a Bluetooth function, the smart TV may be connected to a remote control (the third electronic device) by using Bluetooth, and an NFC chip is disposed in the remote control. In this case, an action of triggering the smartphone to perform a device search may include that a distance between the smartphone and the smart TV is less than a preset distance threshold, that the smartphone establishes a connection to the NFC chip in the remote control by using NFC, or the like.

In some examples, the smartphone is connected to the smart TV by using Bluetooth. When the smartphone enters a Bluetooth communication range of the smart TV, or determines, based on signal strength of a Bluetooth signal, that the distance between the smartphone and the smart TV is less than the preset distance threshold (for example, the distance threshold may be 2 meters), the smartphone establishes a connection to the smart TV by using Bluetooth, and the smartphone multicasts or broadcasts a first search request message. Similarly, after establishing the connection to the smartphone, the smart TV may multicast or broadcast a second search request message.

In some other implementations, after the NFC function is enabled on the smartphone, and the smartphone is close to the remote control of the smart TV, an NFC chip in the smartphone establishes a connection to the NFC chip in the remote control of the smart TV, and the smartphone multicasts or broadcasts the first search request message. Similarly, after determining that the smartphone establishes the connection to the remote control, the smart TV may multicast or broadcast the second search request message. After the remote control establishes the connection to the smartphone by using NFC, the remote control may send a connection success indication to the smart TV by using Bluetooth. After receiving the connection success indication, the smart TV determines that the connection to the first electronic device in the first short-range wireless communication manner is successfully established.

In this implementation, both the smartphone and the smart TV start a device search after the smartphone is close to the remote control of the smart TV. This implements a two-way search between the smartphone and the smart TV.

It should be noted that the establishment of the connection in the first short-range wireless communication manner in the foregoing example is merely an example, and a manner of establishing the connection in the first short-range wireless communication manner is not limited in this application.

S303: Send the first search request message in response to the establishment of the connection in the first short-range wireless communication manner.

S304: Send the second search request message in response to the establishment of the connection in the first short-range wireless communication manner.

In some implementations, at least one of the first search request message and the second search request message needs to include corresponding identification information. For example, the first search request information includes first identification information related to the first electronic device, and the second search request information includes second identification information related to the second electronic device. Alternatively, when the first search request message includes the first identification information related to the first electronic device, the second search request message may not include the second identification information related to the second electronic device. Alternatively, when the second search request message includes the second identification information related to the second electronic device, the first search request message may not include the first identification information related to the first electronic device.

When a search request message received by the first electronic device or the second electronic device does not include identification information, a search response message that includes identification information of a current electronic device may be generated based on a search request, and sent to a corresponding electronic device. In the following examples, a case in which both the first search request message and the second search request message include the identification information is used as an example for description.

It should be noted that "related" in the first identification information related to the first electronic device may be understood as that the identification information, for example, information that can be used to identify a first device in device information of the first device, can be used to determine the unique first electronic device. For example, the first identification information may include at least one first projection identifier and at least one of a device name, a device identity (identity, ID), an Internet protocol (Internet protocol, IP) address, and a media access control address (media access control address, MAC address) of the first electronic device.

Similarly, "related" in the second identification information related to the second electronic device may be understood as that the identification information, for example, information that can be used to identify a second device in device information of the second device, can be used to determine the unique second electronic device. For example, the second identification information may include at least one second projection identifier and at least one of a device name, a device ID, an IP address, or a MAC address of the second electronic device.

The first projection identifier may include information that can be used for projection in the device information of the first electronic device. For example, the first projection identifier may include the device name, the device ID, a service type, the IP address, the MAC address, and the like of the first electronic device.

Similarly, the second projection identifier may include information that can be used for projection in the device information of the second electronic device. For example, the first projection identifier may include the device name, the device ID, a service type, the IP address, the MAC address, and the like of the first electronic device.

In this application, an M-search message in a DLNA is used as an example of the first search request message, to describe the first search request message.

A packet of the M-search message to which a device information field is added may be:
M-SEARCH * HTTP/1.1
HOST: 239.255.255.250:1900
MAN: "ssdp:discover"
MX:seconds to delay response
ST:search target
SELF_LOCATION: DevName, DevID, Service, Addr.
"M-SEARCH *" is a standard packet start of the M-search message, and HTTP/1.1 indicates a Hypertext Transfer Protocol (Hypertext Transfer Protocol, HTTP) version of the M-search message.
HOST is a forwarding host address of the DLNA, and is a multicast channel and port reserved by an Internet assigned numbers authority (Internet assigned numbers authority, IANA) for a simple service discovery protocol (simple service discovery protocol, SSDP). "239.255.255.250:1900" is a default value specified by the IANA.
MAN is a notification type. A MAN type of M-search is "ssdp:discover".
MX is maximum waiting time, namely, duration for waiting for a response during a search, and can be set based on an actual situation.
ST is a header required by the SSDP and indicates a target of a device search. The target of the search may be one of the following types:
   ssdp:all indicates that all devices and services are searched;
   UPuP:rootdevice indicates that only a root device is searched;
   urn:schemas-UPnP-org:device:deviceType:v indicates that devices of a same type are searched, where device types and versions are defined by the universal plug and play (universal plug and play, UPnP) Forum Working Committee;
   urn:schemas-UPnP-org:service:serviceType:v indicates that services of a same type are searched, where service types and versions are defined by the UPnP Forum Working Committee; and
   SELF_LOCATION indicates device information, and may include a device name (DevName), a device ID (DevID), a service type (Service), and an address (Addr), where the address may be an IP address or a MAC address.

Similarly, the second search request message may also be an M-search message, and a structure of the second search request message is the same as that of the first search request message. Details are not described herein again.

It should be noted that, when the first electronic device multicasts or broadcasts the first search request message, the first electronic device may send the first search request message to a host (HOST) port, that is, send the first search request message to a port 1900 of 239.255.255.250. The second electronic device may continuously monitor the port 1900. After the first electronic device sends the first search request message to the port 1900, the second electronic device may detect the first search request message, and receive the first search request message. Similarly, the second electronic device multicasts the second search request message in a same manner or method. Details are not described herein.

It should be further noted that, to implement the device search more effectively, the first electronic device or the second electronic device may continuously multicast or broadcast a corresponding search request at a specific frequency. For example, the first electronic device may multicast four first search request messages per second, and the second electronic device may multicast five second search request messages per second. A multicast frequency is not limited in this application.

S305: Output, in response to the second search request message, the second identification information related to the second electronic device.

S306: Output, in response to the first search request message, the first identification information related to the first electronic device.

In some implementations, when receiving a second search request, the first electronic device may parse the second search request to obtain the second identification information in the second search request, extract the device information of the second electronic device based on the second projection identifier in the second identification information, and display the device information of the second electronic device.

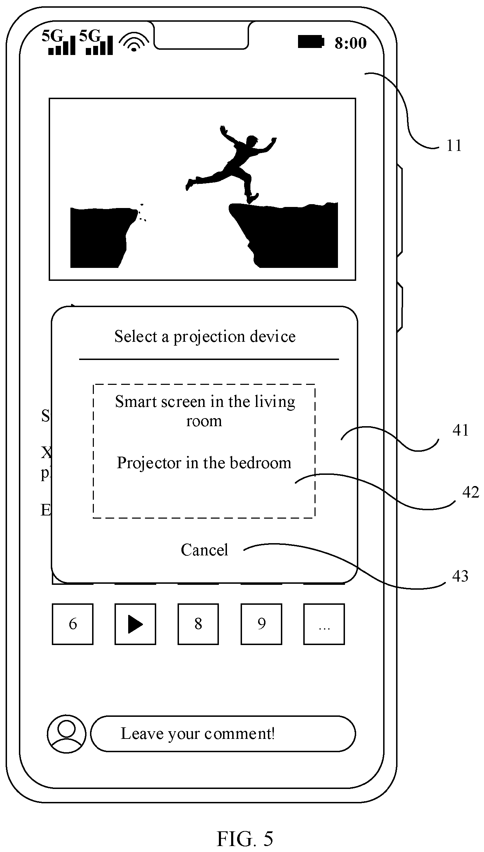

For example, FIG. 5 is a schematic diagram of a scenario in which a first electronic device displays device information of a second electronic device. Refer to FIG. 5. The first electronic device 11 is a smartphone. A video playing interface is displayed on a screen of the smartphone, and a projection device display area 41 is displayed in floating mode on the video playing interface. The projection device display area 41 includes an available projection device selection area 42 and a projection cancellation button 43. Prompt information "Select a projection device" may be displayed on the top of the projection device display area 41, to prompt a user a function of the area. In the available projection device selection area 42, device information of at least one second electronic device is displayed. Because each second search request includes device information of a corresponding second electronic device, after parsing a received second search request, the first electronic device may obtain device information of a second electronic device corresponding to the second search request, and may display, in the available projection device selection area 42, a device name (DevName) in the device information of the second electronic device. For example, FIG. 5 shows device information of two second electronic devices. One is "Smart screen in the living room", and the other is "Projector in the bedroom". That is, the first electronic device receives second search requests from two second electronic devices. The first electronic device may further cancel projection in response to a tap operation performed on the projection cancellation button 43, and close the projection device display area 41.

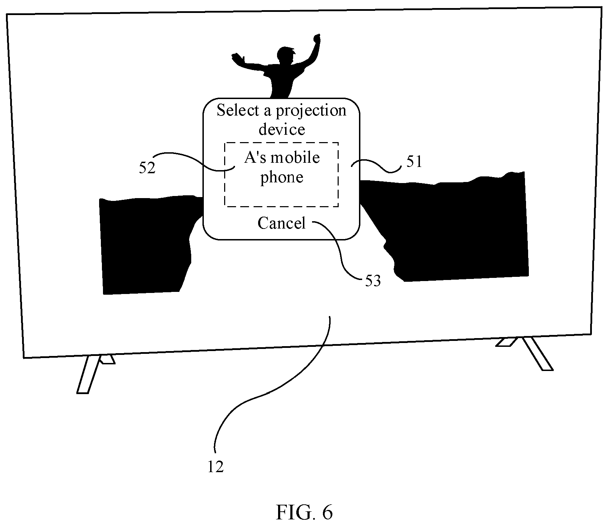

For example, FIG. 6 is a schematic diagram of a scenario in which a second electronic device displays device information of a first electronic device. Refer to FIG. 6. The second electronic device 12 is a smart TV. A video playing interface is displayed on a screen of the smart TV, and a projection device display area 51 is displayed in floating mode on the video playing interface. The projection device display area 51 includes an available projection device selection area 52 and a projection cancellation button 53. The projection device display area 51, the available projection device selection area 52, and the projection cancellation button 53 of the smart TV are the same as those of the first electronic device. Details are not described herein again. In FIG. 6, device information "A's mobile phone" of a first electronic device is displayed in the available projection device selection area 52, that is, the second electronic device receives a first search request from the first electronic device.

S307: The first electronic device sends a second search response message in response to the second search request message.

S308: The second electronic device sends a first search response message in response to the first search request message.

In some implementations, the second search response message includes the first identification information of the first electronic device, and the first search response message includes the second identification information of the second electronic device. The device information is the same as the identification information shown in S303 and S304.

A search response message is sent to a peer device, so that a quantity of times of sending the device information can be increased, a probability of a device search failure caused by a packet loss due to a poor network environment can be reduced, and a success rate of the device search can be improved.

It should be noted that, the sending of the first search request message and the sending of the second search response message run synchronously on the first electronic device and are independent of each other. The sending of the second search request message and the sending of the first search response message run synchronously on the second electronic device and are independent of each other.

S309: Determine whether the second identification information output on the first electronic device includes fourth identification information related to the second electronic device; and if yes, perform S313; otherwise, perform S311.

S310: Determine whether the first identification information output on the second electronic device includes third identification information related to the first electronic device; and if yes, perform S314; otherwise, perform S312.

S311: The first electronic device outputs, based on the first search response message, the fourth identification information related to the second electronic device.

Specifically, the second identification information output later includes the fourth identification information.

S312: The second electronic device outputs, based on the second search response message, the third identification information related to the first electronic device.

Specifically, the first identification information output later includes the third identification information.

In some implementations, that an electronic device outputs identification information may be that the electronic device displays, on a screen of the electronic device based on a projection identifier included in the identification information, device information corresponding to the projection identifier. For example, that the second electronic device outputs the first identification information related to the first electronic device may be displaying, on the second electronic device, a device name of the first electronic device corresponding to one first projection identifier in a first identifier. That the first electronic device outputs the second identification information related to the second electronic device may be displaying, on the first electronic device, a device name of the second electronic device corresponding to one second projection identifier in a second identifier.

It should be noted that, the second identification information output by the first electronic device includes the fourth identification information related to the second electronic device, indicating that the first electronic device displays the device information of the second device corresponding to a fourth projection identifier in the fourth identification information. The first electronic device does not need to perform output again, and may continue to perform S313.

The second identification information output by the first electronic device does not include the fourth identification information related to the second electronic device, indicating that the first electronic device does not display the device information of the second device corresponding to the fourth projection identifier in the fourth identification information. That is, the first electronic device needs to perform S311 to output the fourth identification information. After the fourth identification information is output, the output second identification information includes the fourth identification information.

Similarly, the output first identification information includes the third identification information related to the first electronic device, indicating that the second electronic device displays the device information of the first device corresponding to a third projection identifier in the third identification information. The second electronic device does not need to perform output again, and may continue to perform S314.

The first identification information output by the second electronic device does not include the third identification information related to the first electronic device, indicating that the second electronic device does not display the device information of the first device corresponding to the fourth projection identifier in the third identification information. That is, the second electronic device needs to perform S312 to output the third identification information. After the third identification information is output, the output first identification information includes the third identification information.

Refer to FIG. 5. If the device information included in the first search response message received by the first electronic device is the same as the displayed device information, it is determined that the first electronic device has displayed the device information of the second electronic device. That the device information is the same may be that at least one of IDs and addresses of devices are the same. For example, the device name of the second electronic device included in the first search response message is "Smart screen in the living room", and an IP address is 192.168.50.12. A device name of the displayed second electronic device is also "Smart screen in the living room", and an IP address is also 192.168.50.12. Therefore, the two second electronic devices are same second electronic devices. That is, the first electronic device has displayed the device information of the second electronic device.

In some implementations, device information with the same device name but different device IDs and addresses is considered as different device information. For example, the device name of the second electronic device included in the first search response message and the device name of the displayed second electronic device are both "Smart screen in the living room", the IP address of the second electronic device included in the second search response message is 192.168.50.12, and the IP address of the displayed second electronic device is 192.168.50.101. In this case, the two second electronic devices are considered as different second electronic devices. That is, the device information of the second electronic device is not displayed on the first electronic device. S311 may be performed to display two "Smart screen in the living room" in the available projection device selection area 42 in FIG. 5 to obtain the scenario shown in FIG. 6.

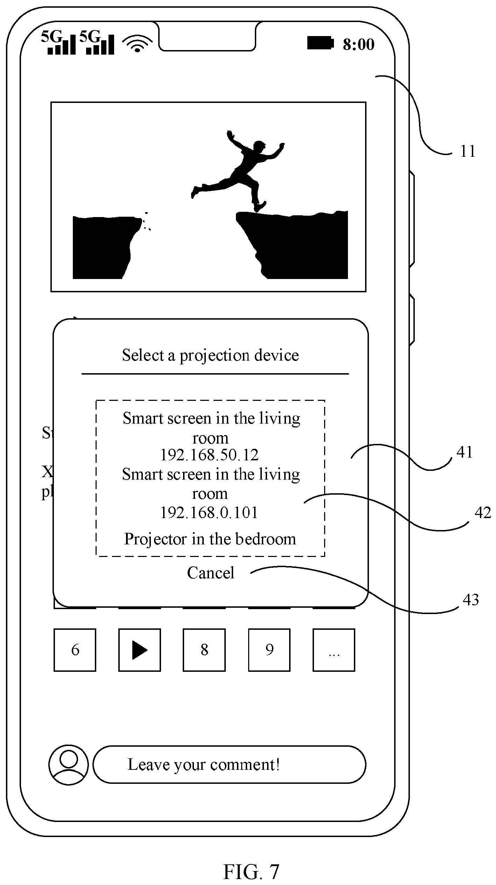

For example, FIG. 7 is a schematic diagram of another scenario in which a first electronic device displays device information of a second electronic device.

Refer to FIG. 7. In the available projection device selection area 42, device information of three second electronic devices is displayed. However, device information of two second electronic devices is "Smart screen in the living room". To distinguish the two "Smart screen in the living room", the device names and IP addresses can be displayed at the same time. As shown in FIG. 7, the IP addresses of the second electronic devices are shown below "Smart screen in the living room" at the same time for differentiation.

It should be noted that when distinguishing two "Smart screen in the living room", other data may be displayed for differentiation. For example, a MAC address, signal strength of a connection between the device and a wireless network device, or the like may be used. This is not limited herein.

A manner in which the second electronic device implements the foregoing method is the same as that of the first electronic device. Details are not described herein again.

S313: Determine whether the first electronic device receives a second user input; and if yes, perform S315; or if not, end the device search procedure.

S314: Determine whether the second electronic device receives a first user input; and if yes, perform S316; or if not, end the device search procedure.

S315: The first electronic device sends, in response to the second user input, a second projection request related to the second projection identifier.

S316: The second electronic device sends, in response to the first user input, a first projection request related to the first projection identifier.

In some implementations, the second user input may be a tap operation performed on the first electronic device. For example, the first electronic device outputs at least one second projection identifier by using a screen, and the second user input may be a tap operation for displaying a second projection identifier area. The first user input is similar to the second user input. Details are not described herein again.

Refer to FIG. 5 and FIG. 7. Device information of a plurality of second electronic devices is displayed in the available projection device selection area 42. When receiving a tap operation performed on a display device information area, the first electronic device determines that the first electronic device receives an instruction for projecting a screen to a target second electronic device. The first electronic device sends, to the target second electronic device, the second projection request related to the second projection identifier. The target second electronic device is the second electronic device indicated by device information corresponding to an effective area of the tap operation. For example, refer to FIG. 5. When the tap operation is performed on an area that displays "Smart screen in the living room", the target second electronic device is the second electronic device corresponding to "Smart screen in the living room".

In some other implementations, the second user input may alternatively be a voice input. That is, after receiving a wake-up voice instruction and a selection voice instruction, a microphone of the first electronic device determines that the second electronic device indicated by the selection voice instruction is the target second electronic device. For example, after receiving audio data of "Hey Celia, project the screen to the smart screen in the living room", the microphone of the first electronic device may identify the voice instruction by using a cloud server, extract the keyword "project the screen to the smart screen in the living room", and determine, based on the keyword, that the target second electronic device is the second electronic device corresponding to "Smart screen in the living room". Then, the first electronic device sends, to the target second electronic device, the second projection request related to the second projection identifier.

A method for determining whether the second electronic device receives an instruction for connecting to a target first electronic device is the same as the method for determining whether the first electronic device receives the instruction for connecting to the target second electronic device. Details are not described herein again.

In some implementations, after sending, to the target second electronic device, the second projection request related to the second projection identifier, the first electronic device may perform projection with reference to the method.

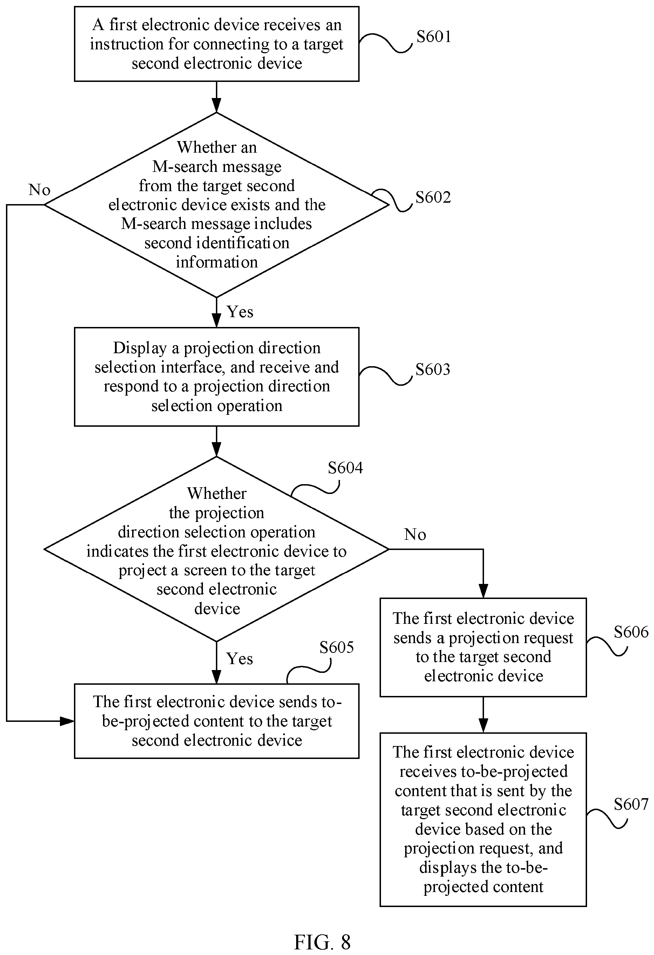

For example, FIG. 8 is a schematic flowchart of applying a communication system and a communication method to projection. Refer to FIG. 8. The procedure includes the following steps.

S601: A first electronic device receives an instruction for connecting to a target second electronic device.

In some implementations, the instruction for connecting to the target second electronic device is the same as that in S313. Details are not described herein again.

S602: Whether an M-search message from the target second electronic device exists and the M-search message includes device information; and if yes, S603 is performed; otherwise, S605 is performed.

It should be noted that, in the method in this application, a corresponding program needs to be integrated into an operating system or a third-party program. When a communication system or a communication method is applied, a device that is not in the system provided in this application or a device that does not use the method provided in this application may exist in a network. These devices may be searched and discovered by using the conventional technology, and do not send an M-search message, or the sent M-search message does not include identification information. In other words, there is no M-search message from the target second electronic device in the first electronic device, or there is an M-search message but the M-search message does not include identification information. In this case, the first electronic device may perform projection by using the conventional technology, directly send to-be-projected content to the target second electronic device, and display the content on the target second electronic device.

When there is an M-search message from the target second electronic device in the first electronic device, and the M-search message includes second identification information of the target second electronic device, it may be determined that the target second electronic device is the second electronic device in the communication system provided in this application, or the communication method provided in this application is applied. That is, the first electronic device and the second electronic device perform a search at the same time. Because both devices perform a search, a projection direction cannot be determined. Therefore, S603 needs to be performed to determine the projection direction by a user.

S603: Display a projection direction selection interface, and receive and respond to a projection direction selection operation.

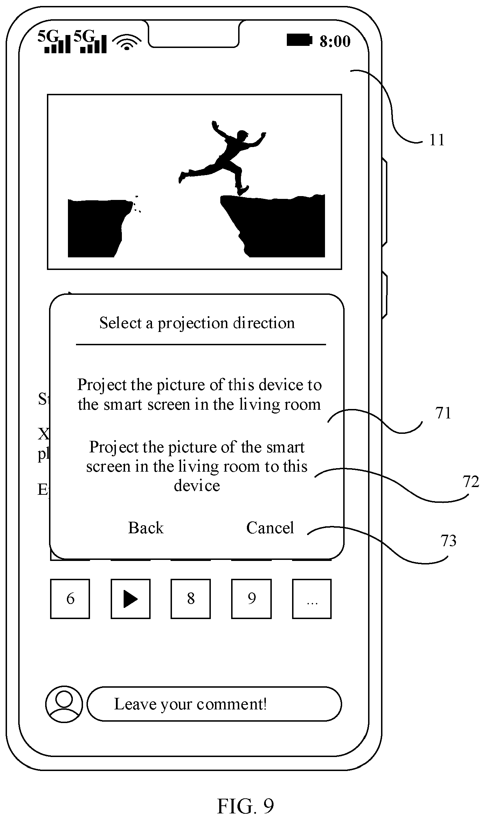

For example, FIG. 9 is a schematic diagram of a projection direction selection interface. In some implementations, it is assumed that in the example of S313, it is determined, by using a tap operation, that the target second electronic device is the second electronic device corresponding to "Smart screen in the living room", and there is an M-search message from the second electronic device corresponding to the "Smart screen in the living room". In this case, the first electronic device may show the interface in FIG. 9.

The first electronic device 11 is a smartphone. A video playing interface is displayed on a screen of the smartphone, and a projection direction display area 71 is displayed in floating mode on the video playing interface. The projection direction display area 71 includes a projection direction selection area 72 and a function button 73. Prompt information "Select a projection direction" may be displayed on the top of the projection direction display area 71, to prompt the user a function of the area.

In the projection direction selection area 72, a projection direction is displayed. For example, refer to FIG. 9. A projection direction may be displayed by using text information "Project the picture of this device to the smart screen in the living room" and "Project the picture of the smart screen in the living room to this device". Alternatively, the projection direction may be displayed by using an icon, an arrow, or the like. This is not limited in this application.

The function button 73 includes a "Back" button and a "Cancel" button. The first electronic device may cancel projection in response to a tap operation performed on the "Cancel" button, and close the projection direction display area 71; or may back to a previous-level interface in response to a tap operation performed on the "Back" button, and display the projection device display area 41.

The projection direction selection operation may be a tap operation performed on the projection direction selection area 72. The tap operation may be performed on an area for displaying "Project the picture of this device to the smart screen in the living room" or an area for displaying "Project the picture of the smart screen in the living room to this device", to select the projection direction.

S604: Whether the projection direction selection operation indicates the first electronic device to project a screen to the target second electronic device; and if yes, S605 is performed; otherwise, S606 is performed.

S605: The first electronic device sends the to-be-projected content to the target second electronic device.

In some implementations, when the to-be-projected content is sent to the target second electronic device, if the to-be-projected content is a picture, picture data may be sent to the target second electronic device; if the to-be-projected content is a video, a uniform resource locator (Uniform Resource Locator, URL) of the video may be sent to the target second electronic device; or if the to-be-projected content is an interface of the first electronic device, when the first electronic device renders the interface, an interface rendering result may be sent to the target second electronic device. A manner of sending the to-be-projected content to the target second electronic device is not limited.

S606: The first electronic device sends a projection request to the target second electronic device.

In some implementations, the projection request is used to indicate a second target device to initiate projection to the first electronic device, and the projection request includes device information of the first electronic device. The projection request may further include requesting content to be projected by the second target device, for example, requesting the target second electronic device to project an interface to the first electronic device.

S607: The first electronic device receives to-be-projected content that is sent by the target second electronic device based on the projection request, and displays the to-be-projected content.

A method for receiving, by the first electronic device, the to-be-projected content that is sent by the target second electronic device based on the projection request is similar to that in S605. Details are not described herein again.

In this application, when the communication system and the communication method are applied to the second electronic device, a procedure and a method thereof are the same as those when the communication system and the communication method are applied to the first electronic device. Details are not described herein again.

It should be noted that, when both the first electronic device and the second electronic device initiate projection, a projection request initiated later overwrites a request initiated earlier, that is, the projection request initiated earlier is disconnected, and then a projection connection is established and projection is performed based on the projection request initiated later. For example, after the first electronic device initiates projection to the second electronic device in response to an operation, the second electronic device also initiates projection to the first electronic device in response to an operation. In this case, a connection for projection by the first electronic device to the second electronic device may be first disconnected, and then a connection for projection by the second electronic device to the first electronic device is established and projection is performed.

In still some implementations, the communication system and the communication method may further include:
The first electronic device multicasts or broadcasts a first search request message in response to a first search instruction. The first search request message includes first identification information related to the first electronic device, and the first identification information includes at least one first projection identifier. The second electronic device multicasts or broadcasts a second search request message in response to a second search instruction. The second search request message includes second identification information related to the second electronic device, and the second identification information includes at least one second projection identifier.

The first search instruction and the second search instruction are respectively delivered to the first electronic device and the second electronic device. The first search instruction may be generated under triggering of an operation that is received by the first electronic device and that indicates the first electronic device to search for a device that can be used for projection. For example, the operation may be that the first electronic device receives an operation of tapping a projection button by the user, or the first electronic device receives a gesture used to indicate to perform projection, or the first electronic device receives voice information used to indicate the user to perform projection, or the like. This is not limited herein. Similarly, the second search instruction may be generated under triggering of an operation that is received by the second electronic device and that indicates the second electronic device to search for a device that can be used for projection.

In this implementation, a manner of multicasting or broadcasting the first search request message and a manner of multicasting or broadcasting the second search request message are similar to those in S303 and S304. Details are not described herein again. After performing multicast or broadcast, the steps shown in S305 to S316 and the steps shown in S601 to S607 may be further performed. Details are not described herein again.

In this implementation, the first electronic device multicasts or broadcasts the first search request message in response to the first search instruction, and the second electronic device multicasts or broadcasts the second search request message in response to the second search instruction. In this case, only one device receives a search request message, device information of a peer device can be obtained, and a device search is completed. Therefore, a probability of a device search failure can be effectively reduced, and device search efficiency can be improved.

It should be understood that sequence numbers of the steps do not mean execution sequences in the foregoing embodiments. The execution sequences of the processes should be determined based on functions and internal logic of the processes, and should not be construed as any limitation on the implementation processes of embodiments of this application.

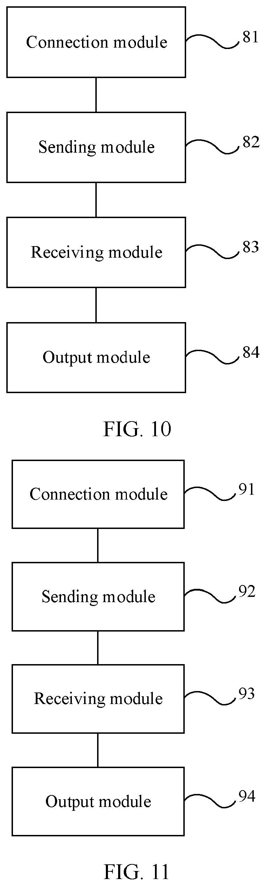

For example, corresponding to the communication system and the communication method provided in the foregoing embodiments, FIG. 10 is a block diagram of a structure of a communication apparatus applied to a first electronic device according to an embodiment of this application. For ease of description, only a part related to this embodiment of this application is shown. Refer to FIG. 10. The communication apparatus includes:
a connection module 81, configured to establish, within a first distance from a second electronic device, a connection in a first short-range wireless communication manner to the second electronic device;
a sending module 82, configured to send a first search request message in a multicast or broadcast manner in response to the establishment of the connection in the first short-range wireless communication manner;
a receiving module 83, configured to receive a second search request message from the second electronic device; and
an output module 84, configured to output, in response to the second search request message, second identification information related to the second electronic device, where the second identification information includes at least one second projection identifier.

The second projection identifier corresponds to a manner of projection between the first electronic device and the second electronic device. The first distance is a distance within which the first electronic device and the second electronic device can communicate with each other in the first short-range wireless communication manner.

In some implementations, the sending module 82 is further configured to send a second search response message to the second electronic device in response to the second search request message.

The receiving module 83 is further configured to receive a first search response message from the second electronic device.

The sending module 82 is further configured to send, to the second electronic device in response to a first user input for the second projection identifier, a second projection request related to the second projection identifier.

In some implementations, the sending module 82 is further configured to send, to the second electronic device in response to the first user input for the second projection identifier, the second projection request related to the second projection identifier, where the second projection request is used for projection by the first electronic device to the second electronic device.

In some implementations, the sending of the first search request message and the sending of the second search response message run synchronously on the first electronic device and are independent of each other.

In some implementations, the output module 84 is further configured to: obtain the output second identification information; and when the output second identification information includes fourth identification information related to the second electronic device, not output the fourth identification information related to the first electronic device; or when the output second identification information does not include fourth identification information related to the second electronic device, output the fourth identification information related to the second electronic device.

For example, FIG. 11 is a block diagram of a structure of a communication apparatus applied to a second electronic device according to an embodiment of this application. The communication apparatus includes:
a connection module 91, configured to establish, within a first distance from a first electronic device, a connection in a first short-range wireless communication manner to the first electronic device;
a sending module 92, configured to send a second search request message in a multicast or broadcast manner in response to the establishment of the connection in the first short-range wireless communication manner;
a receiving module 93, configured to receive a first search request message from the first electronic device; and
an output module 94, configured to output, in response to the first search request message, first identification information related to the first electronic device, where the first identification information includes at least one first projection identifier.

The first projection identifier corresponds to a manner of projection between the first electronic device and the second electronic device. The first distance is a distance within which the first electronic device and the second electronic device can communicate with each other in the first short-range wireless communication manner.

In some implementations, the sending module 92 is further configured to send a first search response message to the first electronic device in response to the first search request message.

The receiving module 93 is further configured to receive a second search response message from the first electronic device.

The sending module 92 is further configured to send, to the first electronic device in response to a second user input for the first projection identifier, a first projection request related to the first projection identifier.

In some implementations, the sending module 92 is further configured to send, to the first electronic device in response to the second user input for the first projection identifier, the first projection request related to the first projection identifier, where the first projection request is used for projection by the second electronic device to the first electronic device.

In some implementations, the sending of the second search request message and the sending of the first search response message run synchronously on the second electronic device and are independent of each other.

In some implementations, the output module 94 is further configured to: obtain the output first identification information; and when the output first identification information includes third identification information related to the first electronic device, not output the third identification information related to the first electronic device; or when the output first identification information does not include third identification information related to the first electronic device, output the third identification information related to the first electronic device.

It should be noted that content such as information exchange between the foregoing modules and an execution process is based on a same concept as that in the method embodiments of this application. For specific functions and technical effects of the content, refer to the method embodiments. Details are not described herein again.

A person skilled in the art may clearly understand that, for the purpose of convenient and brief description, division into the foregoing functional units or modules is merely used as an example for illustration. During actual application, the foregoing functions may be allocated to different functional units or modules for implementation based on a requirement, that is, an inner structure of an apparatus is divided into different functional units or modules to implement all or some of the functions described above. Functional units and modules in embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units and modules are merely for ease of distinguishing between the functional units and modules, but are not intended to limit the protection scope of this application. For a specific working process of the units or modules in the foregoing system, refer to a corresponding process in the foregoing method embodiments. Details are not described herein again.

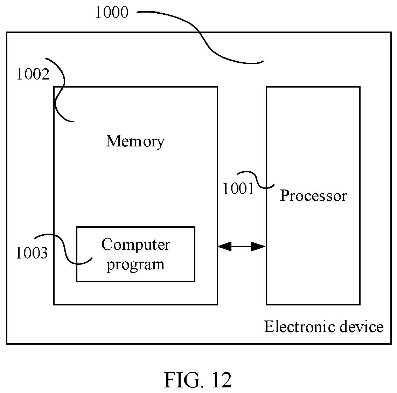

For example, FIG. 12 is a block diagram of a structure of an electronic device according to an embodiment of this application. The electronic device may be a first electronic device or a second electronic device. As shown in FIG. 12, the electronic device 1000 in this embodiment includes at least one processor 1001 (only one processor is shown in FIG. 12), a memory 1002, and a computer program 1003 that is stored in the memory 1002 and that can run on the at least one processor 1001. When executing the computer program 1003, the processor 1001 implements the steps of the network handover method in the foregoing embodiments.

The electronic device 1000 may be a device that supports 5G communication and VoLTE, for example, a smartphone, a tablet computer, a wearable device, an augmented reality (Augmented Reality, AR)/virtual reality (Virtual Reality, VR) device, or an in-vehicle terminal. The electronic device may include but is not limited to the processor 1001 and the memory 1002. A person skilled in the art may understand that FIG. 12 is merely an example of the electronic device 1000, and does not constitute a limitation on the electronic device 1000. The electronic device may include more or fewer components than those shown in the figure, or combine some components, or have different components. For example, the electronic device may further include an input/output device, a network access device, or the like.

The processor 1001 may be a central processing unit (Central Processing Unit, CPU). The processor 1001 may alternatively be another general-purpose processor, a digital signal processor (Digital Signal Processor, DSP), an application-specific integrated circuit (Application-Specific Integrated Circuit, ASIC), a field-programmable gate array (Field-Programmable Gate Array, FPGA) or another programmable logic device, a discrete gate or a transistor logic device, a discrete hardware component, or the like. The general-purpose processor may be a microprocessor, or the processor may be any conventional processor or the like.

In some embodiments, the memory 1002 may be an internal storage unit of the electronic device 1000, for example, a hard disk drive or a memory of the electronic device 1000. In some other embodiments, the memory 1002 may alternatively be an external storage device of the electronic device 1000, for example, a plug-in hard disk, a smart media card (Smart Media Card, SMC), a secure digital (Secure Digital, SD) card, a flash card (Flash Card), or the like that is provided on the electronic device 1000. Further, the memory 1002 may alternatively include both the internal storage unit and the external storage device of the electronic device 1000. The memory 1002 is configured to store an operating system, an application, a bootloader (BootLoader), data, another program, and the like, for example, program code of a computer program. The memory 1002 may be further configured to temporarily store data that has been output or is to be output.

An embodiment of this application further provides a computer-readable storage medium. The computer-readable storage medium stores a computer program. When the computer program is executed by a processor, the steps in the foregoing method embodiments can be implemented.

An embodiment of this application provides a computer program product. When the computer program product runs on a mobile terminal, the mobile terminal is enabled to implement the steps in the foregoing method embodiments when executing the computer program product.

An embodiment of this application provides a chip system. The chip system includes a memory and a processor. The processor executes a computer program stored in the memory, to implement the steps in the foregoing method embodiments.

An embodiment of this application provides a chip system. The chip system includes a processor. The processor is coupled to a computer-readable storage medium. The processor executes a computer program stored in the computer-readable storage medium, to implement the steps in the foregoing method embodiments.

When the integrated unit is implemented in a form of a software functional unit and sold or used as an independent product, the integrated unit may be stored in a computer-readable storage medium. Based on such an understanding, all or some of the processes of the methods in embodiments of this application may be implemented by a computer program instructing related hardware. The computer program may be stored in a computer-readable storage medium. When the computer program is executed by a processor, steps of the foregoing method embodiments may be implemented. The computer program includes computer program code. The computer program code may be in a source code form, an object code form, an executable file form, some intermediate forms, or the like. The computer-readable medium may include at least any entity or apparatus that can carry the computer program code to an electronic device, a recording medium, a computer memory, a read-only memory (ROM, Read-Only Memory), a random access memory (RAM, Random Access Memory), an electrical carrier signal, a telecommunication signal, and a software distribution medium, for example, a USB flash drive, a removable hard disk, a magnetic disk, or an optical disk. In some jurisdictions, the computer-readable medium cannot be the electrical carrier signal or the telecommunication signal according to legislation and patent practices.

In the foregoing embodiments, the description of each embodiment has a focus. For a part that is not described in detail or recorded in an embodiment, refer to related descriptions in other embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In embodiments provided in this application, it should be understood that the disclosed system, method, apparatus, and electronic device may be implemented in other manners. For example, the described apparatus embodiment is merely an example. For example, division into the modules or units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication system, comprising a first electronic device (1000) and a second electronic device, wherein
the first electronic device comprises:
a first processor (1001);
a first memory (1002), wherein the first memory is coupled to the first processor; and
a first computer program (1003), wherein the first computer program is stored in the first memory, and when the first computer program is executed by the first processor, the first electronic device is enabled to perform the following operations:
establishing, within a first distance from the second electronic device, a connection in a first short-range wireless communication manner to the second electronic device;
sending (S303) a first search request message in a multicast or broadcast manner in response to the establishment of the connection in the first short-range wireless communication manner;
receiving a second search request message from the second electronic device; and
outputting (S305), in response to the second search request message, second identification information related to the second electronic device, wherein the second identification information comprises at least one second projection identifier; and
the second electronic device comprises:
a second processor;
a second memory, wherein the second memory is coupled to the second processor; and
a second computer program, wherein the second computer program is stored in the second memory, and when the second computer program is executed by the second processor, the second electronic device is enabled to perform the following operations:
establishing, within the first distance from the first electronic device, the connection in the first short-range wireless communication manner to the first electronic device;
sending (S304) the second search request message in the multicast or broadcast manner in response to the establishment of the connection in the first short-range wireless communication manner;
receiving the first search request message from the first electronic device; and
outputting (S306), in response to the first search request message, first identification information related to the first electronic device, wherein the first identification information comprises at least one first projection identifier, wherein
both the first projection identifier and the second projection identifier correspond to a same manner of projection between the first electronic device and the second electronic device; and
the first distance is a distance within which the first electronic device and the second electronic device can communicate with each other in the first short-range wireless communication manner;
wherein the first electronic device further performs the following operations:
sending (S307) a second search response message to the second electronic device in response to the second search request message;
receiving a first search response message from the second electronic device; and
sending (S315), to the second electronic device in response to a first user input for the second projection identifier, a second projection request related to the second projection identifier.

2. The communication system according to claim 1, wherein the second electronic device further performs the following operations:
sending (S308) the first search response message to the first electronic device in response to the first search request message;
receiving the second search response message from the first electronic device; and
sending (S316), to the first electronic device in response to a second user input for the first projection identifier, a first projection request related to the first projection identifier.

3. The communication system according to claim 2, wherein the first electronic device further performs the following operation:
sending, to the second electronic device in response to the first user input for the second projection identifier, the second projection request related to the second projection identifier, wherein the second projection request is used for projection by the first electronic device to the second electronic device.

4. The communication system according to any one of claims 2 to 3, wherein the second electronic device further performs the following operation:
sending, to the first electronic device in response to the second user input for the first projection identifier, the first projection request related to the first projection identifier, wherein the first projection request is used to request the first electronic device to project a screen to the second electronic device.

5. The communication system according to any one of claims 1 to 4, wherein
the sending of the first search request message and the sending of the second search response message run synchronously on the first electronic device and are independent of each other; and
the sending of the second search request message and the sending of the first search response message run synchronously on the second electronic device and are independent of each other.

6. The communication system according to claim 5, wherein the first search request message comprises the first identification information, and the second search request message comprises the second identification information.

7. The communication system according to claim 5 or 6, wherein the first search request message further comprises: a standard packet start field, a forwarding host address field, a notification type field, a maximum waiting time field, a search target field, and a first projection identifier field; and
the second search request message further comprises: a standard packet start field, a forwarding host address field, a notification type field, a maximum waiting time field, a search target field, and a second projection identifier field.

8. The communication system according to any one of claims 5 to 7, wherein the first search response message comprises the second identification information, and the second search response message comprises the first identification information.

9. The communication system according to any one of claims 1 to 8, wherein the first short-range wireless communication manner comprises: Bluetooth communication, near field communication, wireless fidelity communication, or Zigbee wireless communication.

10. The communication system according to any one of claims 1 to 9, wherein the first projection identifier comprises a device name of the first electronic device; and
the outputting first identification information related to the first electronic device comprises: displaying the device name of the first electronic device on the second electronic device.

11. The communication system according to any one of claims 1 to 10, wherein the second projection identifier comprises a device name of the second electronic device; and
the outputting second identification information related to the second electronic device comprises: displaying the device name of the second electronic device on the first electronic device.

12. The communication system according to any one of claims 1 to 11, wherein before the outputting second identification information related to the second electronic device, the first electronic device further performs the following operations:
obtaining the output second identification information; and
when the output second identification information comprises fourth identification information related to the second electronic device, skipping outputting the fourth identification information related to the second electronic device; or
when the output second identification information does not comprise fourth identification information related to the second electronic device, outputting the fourth identification information related to the second electronic device.

13. A communication method, applied to a communication system, wherein the communication system comprises a first electronic device and a second electronic device, and the method comprises:
establishing, by the first electronic device within a first distance from the second electronic device, a connection in a first short-range wireless communication manner to the second electronic device;
in response to the establishment of the connection in the first short-range wireless communication manner, respectively sending, by the first electronic device (S303) and the second electronic device (S304), a first search request message and a second search request message in a multicast or broadcast manner;
receiving, by the first electronic device, the second search request message from the second electronic device;
outputting (S305), by the first electronic device in response to the second search request message, second identification information related to the second electronic device, wherein the second identification information comprises at least one second projection identifier;
receiving, by the second electronic device, the first search request message from the first electronic device; and
outputting (S306), by the second electronic device in response to the first search request message, first identification information related to the first electronic device, wherein the first identification information comprises at least one first projection identifier, wherein
both the first projection identifier and the second projection identifier correspond to a same manner of projection between the first electronic device and the second electronic device; and
the first distance is a distance within which the first electronic device and the second electronic device can communicate with each other in the first short-range wireless communication manner;
wherein the method further comprises:
sending (S307), by the first electronic device, a second search response message to the second electronic device in response to the second search request message;
receiving, by the first electronic device, a first search response message from the second electronic device; and
sending (S315), by the first electronic device to the second electronic device in response to a first user input for the second projection identifier, a second projection request related to the second projection identifier.

14. The method according to claim 13, wherein the method further comprises:
sending (S308), by the second electronic device, the first search response message to the first electronic device in response to the first search request message;
receiving, by the second electronic device, the second search response message from the first electronic device; and
sending (S316), by the second electronic device to the first electronic device in response to a second user input for the first projection identifier, a first projection request related to the first projection identifier.

## Patentansprüche

1. Kommunikationssystem, umfassend eine erste elektronische Vorrichtung (1000) und eine zweite elektronische Vorrichtung, wobei
die erste elektronische Vorrichtung Folgendes umfasst:
einen ersten Prozessor (1001);
einen ersten Speicher (1002), wobei der erste Speicher mit dem ersten Prozessor gekoppelt ist; und
ein erstes Computerprogramm (1003), wobei das erste Computerprogramm in dem ersten Speicher gespeichert ist und, wenn das erste Computerprogramm von dem ersten Prozessor ausgeführt wird, die erste elektronische Vorrichtung in die Lage versetzt, die folgenden Vorgänge durchzuführen:
Herstellen einer Verbindung mit der zweiten elektronischen Vorrichtung auf eine erste drahtlose Kurzstreckenkommunikationsweise innerhalb einer ersten Entfernung von der zweiten elektronischen Vorrichtung;
Senden (S303) einer ersten Suchanforderungsnachricht auf eine Multicast- oder Broadcast-Weise als Antwort auf die Herstellung der Verbindung auf die erste drahtlose Kurzstreckenkommunikationsweise;
Empfangen einer zweiten Suchanforderungsnachricht von der zweiten elektronischen Vorrichtung; und
Ausgeben (S305) von zweiten Identifikationsinformationen, die die zweite elektronische Vorrichtung betreffen, als Antwort auf die zweite Suchanforderungsnachricht, wobei die zweiten Identifikationsinformationen mindestens eine zweite Projektionskennung umfassen; und
die zweite elektronische Vorrichtung Folgendes umfasst:
einen zweiten Prozessor;
einen zweiten Speicher, wobei der zweite Speicher mit dem zweiten Prozessor gekoppelt ist; und
ein zweites Computerprogramm, wobei das zweite Computerprogramm in dem zweiten Speicher gespeichert ist und, wenn das zweite Computerprogramm von dem zweiten Prozessor ausgeführt wird, die zweite elektronische Vorrichtung in die Lage versetzt wird, die folgenden Vorgänge durchzuführen:
Herstellen der Verbindung mit der ersten elektronischen Vorrichtung auf die erste drahtlose Kurzstreckenkommunikationsweise innerhalb der ersten Entfernung von der ersten elektronischen Vorrichtung;
Senden (S304) der zweiten Suchanforderungsnachricht auf die Multicast- oder Broadcast-Weise als Antwort auf die Herstellung der Verbindung auf die erste drahtlose Kurzstreckenkommunikationsweise;
Empfangen der ersten Suchanforderungsnachricht von der ersten elektronischen Vorrichtung; und
Ausgeben (S306) von ersten Identifikationsinformationen, die die erste elektronische Vorrichtung betreffen, als Antwort auf die erste Suchanforderungsnachricht, wobei die ersten Identifikationsinformationen mindestens eine erste Projektionskennung umfassen, wobei
sowohl die erste Projektionskennung als auch die zweite Projektionskennung einer gleichen Projektionsweise zwischen der ersten elektronischen Vorrichtung und der zweiten elektronischen Vorrichtung entsprechen; und
die erste Entfernung eine Entfernung ist, innerhalb derer die erste elektronische Vorrichtung und die zweite elektronische Vorrichtung auf die erste drahtlose Kurzstreckenkommunikationsweise miteinander kommunizieren können;
wobei die erste elektronische Vorrichtung ferner die folgenden Vorgänge durchführt:
Senden (S307) einer zweiten Suchantwortnachricht an die zweite elektronische Vorrichtung als Antwort auf die zweite Suchanforderungsnachricht;
Empfangen einer ersten Suchantwortnachricht von der zweiten elektronischen Vorrichtung; und
Senden (S315) einer zweiten Projektionsanforderung, die die zweite Projektionskennung betrifft, an die zweite elektronische Vorrichtung als Antwort auf eine erste Benutzereingabe für die zweite Projektionskennung.

2. Kommunikationssystem nach Anspruch 1, wobei die zweite elektronische Vorrichtung ferner die folgenden Vorgänge durchführt:
Senden (S308) der ersten Suchantwortnachricht an die erste elektronische Vorrichtung als Antwort auf die erste Suchanforderungsnachricht;
Empfangen der zweiten Suchantwortnachricht von der ersten elektronischen Vorrichtung; und
Senden (S316) einer ersten Projektionsanforderung, die die erste Projektionskennung betrifft, an die erste elektronische Vorrichtung als Antwort auf eine zweite Benutzereingabe für die erste Projektionskennung.

3. Kommunikationssystem nach Anspruch 2, wobei die erste elektronische Vorrichtung ferner den folgenden Vorgang durchführt:
Senden der zweiten Projektionsanforderung, die die zweite Projektionskennung betrifft, an die zweite elektronische Vorrichtung als Antwort auf die erste Benutzereingabe für die zweite Projektionskennung, wobei die zweite Projektionsanforderung zur Projektion durch die erste elektronische Vorrichtung auf die zweite elektronische Vorrichtung verwendet wird.

4. Kommunikationssystem nach einem der Ansprüche 2 bis 3, wobei die zweite elektronische Vorrichtung ferner den folgenden Vorgang durchführt:
Senden der ersten Projektionsanforderung, die die erste Projektionskennung betrifft, an die erste elektronische Vorrichtung als Antwort auf die zweite Benutzereingabe für die erste Projektionskennung, wobei die erste Projektionsanforderung verwendet wird, um die erste elektronische Vorrichtung aufzufordern, einen Bildschirm auf die zweite elektronische Vorrichtung zu projizieren.

5. Kommunikationssystem nach einem der Ansprüche 1 bis 4, wobei das Senden der ersten Suchanforderungsnachricht und das Senden der zweiten Suchantwortnachricht synchron auf der ersten elektronischen Vorrichtung laufen und unabhängig voneinander sind; und
das Senden der zweiten Suchanforderungsnachricht und das Senden der ersten Suchantwortnachricht synchron auf der zweiten elektronischen Vorrichtung laufen und unabhängig voneinander sind.

6. Kommunikationssystem nach Anspruch 5, wobei die erste Suchanforderungsnachricht die ersten Identifikationsinformationen umfasst und die zweite Suchanforderungsnachricht die zweiten Identifikationsinformationen umfasst.

7. Kommunikationssystem nach Anspruch 5 oder 6, wobei die erste Suchanforderungsnachricht ferner Folgendes umfasst: ein Standardpaketstartfeld, ein Weiterleitungshostadressenfeld, ein Benachrichtigungstypenfeld, ein Feld für eine maximale Wartezeit, ein Suchzielfeld und ein erstes Projektionskennungsfeld; und
die zweite Suchanforderungsnachricht ferner Folgendes umfasst:
ein Standardpaketstartfeld, ein Weiterleitungshostadressenfeld, ein Benachrichtigungstypenfeld, ein Feld für eine maximale Wartezeit, ein Suchzielfeld und ein zweites Projektionskennungsfeld.

8. Kommunikationssystem nach einem der Ansprüche 5 bis 7, wobei die erste Suchantwortnachricht die zweiten Identifikationsinformationen umfasst und die zweite Suchantwortnachricht die ersten Identifikationsinformationen umfasst.

9. Kommunikationssystem nach einem der Ansprüche 1 bis 8, wobei die erste drahtlose Kurzstreckenkommunikationsweise Folgendes umfasst: Bluetooth-Kommunikation, Nahfeldkommunikation, Wireless-Fidelity-Kommunikation oder drahtlose Zigbee-Kommunikation.

10. Kommunikationssystem nach einem der Ansprüche 1 bis 9, wobei die erste Projektionskennung einen Vorrichtungsnamen der ersten elektronischen Vorrichtung umfasst; und
das Ausgeben von ersten Identifikationsinformationen, die die erste elektronische Vorrichtung betreffen, Folgendes umfasst: Darstellen des Vorrichtungsnamens der ersten elektronischen Vorrichtung auf der zweiten elektronischen Vorrichtung.

11. Kommunikationssystem nach einem der Ansprüche 1 bis 10, wobei die zweite Projektionskennung einen Vorrichtungsnamen der zweiten elektronischen Vorrichtung umfasst; und
das Ausgeben von zweiten Identifikationsinformationen, die die zweite elektronische Vorrichtung betreffen, Folgendes umfasst: Darstellen des Vorrichtungsnamens der zweiten elektronischen Vorrichtung auf der ersten elektronischen Vorrichtung.

12. Kommunikationssystem nach einem der Ansprüche 1 bis 11, wobei die erste elektronische Vorrichtung vor dem Ausgeben von zweiten Identifikationsinformationen, die die zweite elektronische Vorrichtung betreffen, ferner die folgenden Vorgänge durchführt:
Erlangen der ausgegebenen zweiten Identifikationsinformationen; und,
wenn die ausgegebenen zweiten Identifikationsinformationen vierte Identifikationsinformationen umfassen, die die zweite elektronische Vorrichtung betreffen, Überspringen des Ausgebens der vierten Identifikationsinformationen, die die zweite elektronische Vorrichtung betreffen; oder,
wenn die ausgegebenen zweiten Identifikationsinformationen keine vierten Identifikationsinformationen umfassen, die die zweite elektronische Vorrichtung betreffen, Ausgeben der vierten Identifikationsinformationen, die die zweite elektronische Vorrichtung betreffen.

13. Kommunikationsverfahren, das auf ein Kommunikationssystem angewendet wird, wobei das Kommunikationssystem eine erste elektronische Vorrichtung und eine zweite elektronische Vorrichtung umfasst und das Verfahren Folgendes umfasst:
Herstellen einer Verbindung mit der zweiten elektronischen Vorrichtung durch die erste elektronische Vorrichtung auf eine erste drahtlose Kurzstreckenkommunikationsweise innerhalb einer ersten Entfernung von der zweiten elektronischen Vorrichtung;
jeweiliges Senden einer ersten Suchanforderungsnachricht und einer zweiten Suchanforderungsnachricht durch die erste elektronische Vorrichtung (S303) und die zweite elektronische Vorrichtung (S304) auf eine Multicast- oder Broadcast-Weise als Antwort auf die Herstellung der Verbindung auf die erste drahtlose Kurzstreckenkommunikationsweise;
Empfangen der zweiten Suchanforderungsnachricht von der zweiten elektronischen Vorrichtung durch die erste elektronische Vorrichtung;
Ausgeben (S305) von zweiten Identifikationsinformationen, die die zweite elektronische Vorrichtung betreffen, durch die erste elektronische Vorrichtung als Antwort auf die zweite Suchanforderungsnachricht, wobei die zweiten Identifikationsinformationen mindestens eine zweite Projektionskennung umfassen;
Empfangen der ersten Suchanforderungsnachricht von der ersten elektronischen Vorrichtung durch die zweite elektronische Vorrichtung; und
Ausgeben (S306) von ersten Identifikationsinformationen, die die erste elektronische Vorrichtung betreffen, durch die zweite elektronische Vorrichtung als Antwort auf die erste Suchanforderungsnachricht, wobei die ersten Identifikationsinformationen mindestens eine erste Projektionskennung umfassen, wobei
sowohl die erste Projektionskennung als auch die zweite Projektionskennung einer gleichen Projektionsweise zwischen der ersten elektronischen Vorrichtung und der zweiten elektronischen Vorrichtung entsprechen; und
die erste Entfernung eine Entfernung ist, innerhalb derer die erste elektronische Vorrichtung und die zweite elektronische Vorrichtung auf die erste drahtlose Kurzstreckenkommunikationsweise miteinander kommunizieren können;
wobei das Verfahren ferner Folgendes umfasst:
Senden (S307) einer zweiten Suchantwortnachricht an die zweite elektronische Vorrichtung durch die erste elektronische Vorrichtung als Antwort auf die zweite Suchanforderungsnachricht;
Empfangen einer ersten Suchantwortnachricht von der zweiten elektronischen Vorrichtung durch die erste elektronische Vorrichtung; und
Senden (S315) einer zweiten Projektionsanforderung, die die zweite Projektionskennung betrifft, an die zweite elektronische Vorrichtung durch die erste elektronische Vorrichtung als Antwort auf eine erste Benutzereingabe für die zweite Projektionskennung.

14. Verfahren nach Anspruch 13, wobei das Verfahren ferner Folgendes umfasst:
Senden (S308) der ersten Suchantwortnachricht an die erste elektronische Vorrichtung durch die zweite elektronische Vorrichtung als Antwort auf die erste Suchanforderungsnachricht;
Empfangen der zweiten Suchantwortnachricht von der ersten elektronischen Vorrichtung durch die zweite elektronische Vorrichtung; und
Senden (S316) einer ersten Projektionsanforderung, die die erste Projektionskennung betrifft, an die erste elektronische Vorrichtung durch die zweite elektronische Vorrichtung als Antwort auf eine zweite Benutzereingabe für die erste Projektionskennung.

## Revendications

1. Système de communication, comprenant un premier dispositif électronique (1000) et un second dispositif électronique, dans lequel
le premier dispositif électronique, comprend :
un premier processeur (1001) ;
une première mémoire (1002), dans lequel la première mémoire est couplée au premier processeur ; et
un premier programme informatique (1003), dans lequel le premier programme informatique est stocké dans la première mémoire, et lorsque le premier programme informatique est exécuté par le premier processeur, le premier dispositif électronique est activé pour réaliser les opérations suivantes :
l'établissement, à une première distance du second dispositif électronique, d'une connexion dans un premier mode de communication sans fil à courte portée au second dispositif électronique ;
l'envoi (S303) d'un premier message de demande de recherche en mode multidiffusion ou diffusion générale en réponse à l'établissement de la connexion du premier mode de communication sans fil à courte portée ;
la réception d'un second message de demande de recherche en provenance du second dispositif électronique ; et
la délivrance en sortie (S305), en réponse au second message de demande de recherche, des deuxièmes informations d'identification relatives au second dispositif électronique, dans lequel les deuxièmes informations d'identification comprennent au moins un second identifiant de projection ; et le second dispositif électronique comprend :
un second processeur ;
une seconde mémoire, dans lequel la seconde mémoire est couplée au second processeur ; et
un second programme informatique, dans lequel le second programme informatique est stocké dans la seconde mémoire, et lorsque le second programme informatique est exécuté par le second processeur, le second dispositif électronique est activé pour réaliser les opérations suivantes :
l'établissement, à la première distance du premier dispositif électronique, de la connexion du premier mode de communication sans fil à courte portée au premier dispositif électronique ;
l'envoi (S304) du second message de demande de recherche en mode multidiffusion ou diffusion générale en réponse à l'établissement de la connexion du premier mode de communication sans fil à courte portée ;
la réception du premier message de demande de recherche en provenance du premier dispositif électronique ; et
la délivrance en sortie (S306), en réponse au premier message de demande de recherche, des premières informations d'identification relatives au premier dispositif électronique, dans lequel les premières informations d'identification comprennent au moins un premier identifiant de projection, dans lequel
le premier identifiant de projection et le second identifiant de projection correspondent tous deux à un même mode de projection entre le premier dispositif électronique et le second dispositif électronique ; et
la première distance est une distance à laquelle le premier dispositif électronique et le second dispositif électronique peuvent communiquer l'un avec l'autre dans le premier mode de communication sans fil à courte portée ;
dans lequel le premier dispositif électronique réalise également les opérations suivantes :
l'envoi (S307) d'un second message de réponse de recherche au second dispositif électronique en réponse au second message de demande de recherche ;
la réception d'un premier message de réponse de recherche en provenance du second dispositif électronique ; et
l'envoi (S315), au second dispositif électronique en réponse à une première entrée utilisateur pour le second identifiant de projection, d'une seconde demande de projection relative au second identifiant de projection.

2. Système de communication selon la revendication 1, dans lequel le dispositif électronique réalise les opérations suivantes :
l'envoi (S308) du premier message de réponse de recherche au premier dispositif électronique en réponse au premier message de demande de recherche ;
la réception du second message de demande de recherche en provenance du premier dispositif électronique ; et
l'envoi (S316), au premier dispositif électronique en réponse à une seconde entrée utilisateur pour le premier identifiant de projection, d'une première demande de projection liée au premier identifiant de projection.

3. Système de communication selon la revendication 2, dans lequel le dispositif électronique réalise également l'opération suivante :
l'envoi, au second dispositif électronique en réponse à la première entrée utilisateur pour le second identifiant de projection, de la seconde demande de projection relative au second identifiant de projection, dans lequel la seconde demande de projection est utilisée pour la projection par le premier dispositif électronique vers le second dispositif électronique.

4. Système de communication selon l'une quelconque des revendications 2 à 3, dans lequel le second dispositif électronique réalise également l'opération suivante :
l'envoi, au premier dispositif électronique en réponse à la seconde entrée utilisateur pour le premier identifiant de projection, de la première demande de projection relative au premier identifiant de projection, dans lequel la première demande de projection est utilisée pour demander au premier dispositif électronique de projeter un écran sur le second dispositif électronique.

5. Système de communication selon l'une quelconque des revendications 1 à 4, dans lequel
l'envoi du premier message de demande de recherche et l'envoi du second message de réponse de recherche s'exécutent de manière synchrone sur le premier dispositif électronique et sont indépendants l'un de l'autre ; et
l'envoi du second message de demande de recherche et l'envoi du premier message de réponse de recherche s'exécutent de manière synchrone sur le second dispositif électronique et sont indépendants l'un de l'autre.

6. Système de communication selon la revendication 5, dans lequel le premier message de demande de recherche comprend les premières informations d'identification, et le second message de demande de recherche comprend les deuxièmes informations d'identification.

7. Système de communication selon la revendication 5 ou 6, dans lequel le premier message de demande de recherche comprend également : un champ de début de paquet standard, un champ d'adresse d'hôte de transfert, un champ de type de notification, un champ de temps d'attente maximal, un champ de cible de recherche et un premier champ d'identifiant de projection ; et le second message de demande de recherche comprend également : un champ de début de paquet standard, un champ d'adresse d'hôte de transfert, un champ de type de notification, un champ de temps d'attente maximal, un champ de cible de recherche et un second champ d'identifiant de projection.

8. Système de communication selon l'une quelconque des revendications 5 à 7, dans lequel le premier message de réponse de recherche comprend les deuxièmes informations d'identification, et le second message de réponse de recherche comprend les deuxièmes informations d'identification.

9. Système de communication selon l'une quelconque des revendications 1 à 8, dans lequel le premier mode de communication sans fil à courte portée comprend : la communication Bluetooth, la communication en champ proche, la communication sans fil haute fidélité ou la communication sans fil Zigbee.

10. Système de communication selon l'une quelconque des revendications 1 à 9, dans lequel le premier identifiant de projection comprend un nom de dispositif du premier dispositif électronique ; et
la délivrance en sortie des premières informations d'identification relatives au premier dispositif électronique comprend : l'affichage du nom du dispositif du premier dispositif électronique sur le second dispositif électronique.

11. Système de communication selon l'une quelconque des revendications 1 à 10, dans lequel le second identifiant de projection comprend un nom de dispositif du second dispositif électronique ; et
la délivrance en sortie des deuxièmes informations d'identification relatives au second dispositif électronique comprend : l'affichage du nom du dispositif du second dispositif électronique sur le premier dispositif électronique.

12. Système de communication selon l'une quelconque des revendications 1 à 11, dans lequel, avant la délivrance en sortie des deuxièmes informations d'identification relatives au second dispositif électronique, le premier dispositif électronique réalise également les opérations suivantes :
l'obtention des deuxièmes informations d'identification de sortie ; et
lorsque les deuxièmes informations d'identification de sortie comprennent des quatrièmes informations d'identification relatives au second dispositif électronique, le fait d'ignorer la délivrance en sortie des quatrièmes informations d'identification relatives au second dispositif électronique ; ou
lorsque les deuxièmes informations d'identification de sortie ne comprennent pas des quatrièmes informations d'identification relatives au second dispositif électronique, la délivrance en sortie des quatrièmes informations d'identification relatives au second dispositif électronique.

13. Procédé de communication, appliqué à un système de communication, dans lequel le système de communication comprend un premier dispositif électronique et un second dispositif électronique, et le procédé comprend :
l'établissement, par le premier dispositif électronique à une première distance à partir du second dispositif électronique, d'une connexion dans un premier mode de communication sans fil à courte portée au second dispositif électronique ;
en réponse à l'établissement de la connexion du premier mode de communication sans fil à courte portée, l'envoi respectivement, par le premier dispositif électronique (S303) et le second dispositif électronique (S304), d'un premier message de demande de recherche et d'un second message de demande de recherche en mode multidiffusion ou diffusion générale ;
la réception, par le premier dispositif électronique, du second message de demande de recherche en provenance du second dispositif électronique ;
la délivrance en sortie (S305), par le premier dispositif électronique en réponse au second message de demande de recherche, des deuxièmes informations d'identification relatives au second dispositif électronique, dans lequel les deuxièmes informations d'identification comprennent au moins un second identifiant de projection ;
la réception, par le second dispositif électronique, du premier message de demande de recherche en provenance du premier dispositif électronique ; et
la délivrance en sortie (S306), par le second dispositif électronique en réponse au premier message de demande de recherche, des premières informations d'identification relatives au second dispositif électronique, dans lequel les premières informations d'identification comprennent au moins un premier identifiant de projection, dans lequel
le premier identifiant de projection et le second identifiant de projection correspondent tous deux à un même mode de projection entre le premier dispositif électronique et le second dispositif électronique ; et
la première distance est une distance à laquelle le premier dispositif électronique et le second dispositif électronique peuvent communiquer l'un avec l'autre dans le premier mode de communication sans fil à courte portée ;
dans lequel le procédé comprend également :
l'envoi (S307), par le premier dispositif électronique, d'un second message de réponse de recherche au second dispositif électronique en réponse au second message de demande de recherche ;
la réception, par le premier dispositif électronique, d'un premier message de réponse de recherche en provenance du second dispositif électronique ; et
l'envoi (S315), par le premier dispositif électronique au second dispositif électronique en réponse à une première entrée utilisateur pour le second identifiant de projection, d'une seconde demande de projection relative au second identifiant de projection.

14. Procédé selon la revendication 13, dans lequel le procédé comprend également :
l'envoi (S308), par le second dispositif électronique, du premier message de réponse de recherche au premier dispositif électronique en réponse au premier message de demande de recherche ;
la réception, par le second dispositif électronique, du second message de réponse de recherche en provenance du premier dispositif électronique ; et
l'envoi (S316), par le second dispositif électronique au premier dispositif électronique en réponse à une seconde entrée utilisateur pour le premier identifiant de projection, d'une première demande de projection relative au premier identifiant de projection.
